(19) Europäisches Patentamt / European Patent Office / Office européen des brevets

(11) **EP 3 373 592 B1**

(12) **EUROPEAN PATENT SPECIFICATION**

(45) Date of publication and mention
of the grant of the patent:
**08.01.2020 Bulletin 2020/02**

(21) Application number: **16861811.4**

(22) Date of filing: **21.07.2016**

(51) Int Cl.:
*H04Q 9/00* *(2006.01)* *B60R 25/24* *(2013.01)*
*E05B 49/00* *(2006.01)*

(86) International application number:
**PCT/JP2016/071459**

(87) International publication number:
**WO 2017/077742 (11.05.2017 Gazette 2017/19)**

(54) **PORTABLE TERMINAL DEVICE AUTHENTICATION SYSTEM AND IN-VEHICLE DEVICE**

AUTHENTIFIZIERUNGSSYSTEM FÜR TRAGBARE ENDGERÄTEVORRICHTUNG UND FAHRZEUGINTERNE VORRICHTUNG

SYSTÈME D'AUTHENTIFICATION DE DISPOSITIF TERMINAL PORTABLE ET DISPOSITIF EMBARQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2015 JP 2015217678**

(43) Date of publication of application:
**12.09.2018 Bulletin 2018/37**

(73) Proprietor: **Honda Lock MFG. Co., Ltd.**
**Miyazaki-City, Miyazaki 880-0293 (JP)**

(72) Inventors:
• **MATSUDA Takayuki**
**Miyazaki-shi**
**Miyazaki 880-0293 (JP)**

• **TOMINAGA Kazunobu**
**Miyazaki-shi**
**Miyazaki 880-0293 (JP)**

(74) Representative: **Weickmann & Weickmann PartmbB**
**Postfach 860 820**
**81635 München (DE)**

(56) References cited:
JP-A- 2010 185 186    JP-A- 2010 185 186
JP-A- 2013 100 672    JP-B2- 5 041 337
US-A1- 2002 039 079   US-A1- 2008 129 477

## Description

[Technical Field]

The present invention relates to a portable terminal device authentication system, and an in-vehicle device.

[Background Art]

In the related art, bidirectional communication authentication technology in which authentication of a terminal device is performed by performing bidirectional communication between an in-vehicle device and a portable terminal device that a user carries to perform locking and unlocking of a door, starting of an engine, and the like in a vehicle is known.

With regard to this, a keyless entry device in which a predetermined control is performed when a vehicle-side device authenticates an answer signal transmitted from a portable device, the portable device detects intensity of a request signal transmitted from a transmission antenna of the vehicle-side device, the vehicle-side device controls a vehicle-side transmission unit in order for the intensity of the request signal transmitted from the transmission antenna to vary on the way, and detection is made as to whether an intensity variation corresponding to the variation of the request signal occurs in a signal received by the portable device is known (for example, refer to JP 2010-185186 A, on which the preamble of claim 1 is based).

US 2002/039079 A1 shows a portable device including the transmitter for a keyless vehicle entry system. The transmitter transmits signals to a vehicle door lock one direction communication from the portable device to the vehicle. [Technical Problem]

However, in the technology of JP 2010-185186 A, the intensity of the signal transmitted from the transmission antenna of the in-vehicle device is adjusted through control of an amplification rate of an amplifier. Therefore, it is difficult to construct the amplifier simply.

Aspects of the invention have been made in consideration of these circumstances, and an object thereof is to provide a portable terminal device authentication system in which authentication security is improved by adjusting intensity of an authentication signal that is transmitted, and an in-vehicle device.

[Solution to Problem]

In order to achieve the above-described object, the invention provides a portable terminal device authentication system according to claim 1, and an in-vehicle device according to claim 7.

(1) According to an aspect of the invention, there is provided a portable terminal device authentication system including: an in-vehicle device including an in-vehicle side transmission unit configured to transmit a request signal, an in-vehicle side reception unit configured to receive an answer signal, and an in-vehicle side control unit configured to cause the in-vehicle side transmission unit to transmit the request signal and determine validity of the answer signal that is received by the in-vehicle side reception unit; and a portable terminal device including a portable side reception unit configured to receive the request signal, a portable side transmission unit configured to transmit the answer signal, and a portable side control unit configured to control the portable side transmission unit to transmit the answer signal in response to reception of the request signal by the portable side reception unit. The in-vehicle side control unit generates a plurality of instruction signals which are different in a duty ratio, and supplies the instruction signals which are generated to the in-vehicle side transmission unit in correspondence with the request signal. The in-vehicle side transmission unit generates an authentication signal with signal intensity corresponding to the duty ratio of the plurality of instruction signals which are supplied, and transmits the request signal including the authentication signal to the portable terminal device. The portable side control unit performs processing based on an intensity value of the authentication signal which is included in the request signal that is received by the portable side reception unit. The in-vehicle side control unit or the portable side control unit determines validity of the in-vehicle device or the portable terminal device on the basis of a processing result of the portable side control unit.

According to the aspect (1), the in-vehicle side control unit generates a plurality of signals which are different in a duty ratio, supplies the signals which are generated to the in-vehicle side transmission unit in correspondence with the request signal, and transmits the request signal including an authentication signal with signal intensity corresponding to the duty ratio from the in-vehicle side transmission unit. The portable side control unit performs processing based on an intensity value of the plurality of authentication signals which are included in the request signal that is received by the portable side reception unit. The in-vehicle side control unit or the portable side control unit determines validity of the in-vehicle device or the portable terminal device on the basis of a processing result of the portable side control unit. As a result, the portable terminal device authentication system can improve authentication security by adjusting the intensity of the authentication signal that is transmitted.

(2) In the portable terminal device according to the aspect (1), the portable side control unit may perform the processing based on a first intensity value of a first authentication signal and a second intensity value of a second authentication signal, the first intensity value and the second intensity value being included in the authentication signal, and may cause the portable side transmission unit to transmit the processing result to be included in the answer signal, and the in-vehicle side control unit may determine validity of the request signal on the basis of the processing result that is included in the answer signal.

According to the aspect (2), as is the case with the above-described configuration, the portable terminal device authentication system can improve authentication security by adjusting the intensity of the authentication signal that is transmitted. In addition, in the portable terminal device authentication system, the processing result based on the first intensity value of the first authentication signal and the second intensity value of the second authentication signal is transmitted from the portable terminal device, and thus it is possible to adjust the intensity of the authentication signal that is transmitted. In addition, the in-vehicle side control unit determines validity of the request signal. As a result, it is possible to improve authentication security.

(3) In the portable terminal device authentication system according to the aspect (1), the portable side control unit may perform the processing based on a first intensity value of a first authentication signal and a second intensity value of a second authentication signal, the first intensity value and the second intensity value being included in the authentication signal, and may determine validity of the request signal on the basis of the processing result.

According to the aspect (3), in the portable terminal device authentication system, the portable side control unit determines validity of the request signal on the basis of the first intensity value of the first authentication signal and the second intensity value of the second authentication signal, and thus the portable side control unit can perform authentication by using a plurality of authentication signals.

(4) In the portable terminal device authentication system according to the aspect (2), the in-vehicle side control unit may continuously output the instruction signal with a first duty ratio for a first time, and may continuously output the instruction signal with a second duty ratio for a second time, the portable side control unit may measure a first detection time of the first intensity value of the first authentication signal, and a second detection time of the second intensity value of the second authentication signal, and the in-vehicle side control unit may compare the first time and the second time, and the first detection time and the second detection time with each other, and may determine validity of the in-vehicle device or the portable terminal device on the basis of the comparison result.

According to the aspect (4), in the portable terminal device authentication system, the in-vehicle side control unit continuously outputs an instruction signal with a predetermined duty ratio, and the portable terminal device measures the authentication signal. The portable terminal device authentication system can perform determination based on time information through determination based on a comparison result between time for which a signal with a duty ratio is continuously output and time at which the intensity value of the authentication signal is detected, and thus it is possible to further enhance determination accuracy in authentication.

(5) In the portable terminal device authentication system according to the aspect (2), the in-vehicle side control unit may determine validity of the in-vehicle device or the portable terminal device on the basis of information including a number of times of determination as the first authentication signal and a number of times of determination as the second authentication signal by the portable side control unit on the basis of a first threshold value.

According to the aspect (5), the portable terminal device authentication system perform signal determination on the basis of the number of times, and thus determination can be performed on the basis of whether or not it matches a desired number of times. As a result, it is possible to further enhance determination accuracy in authentication.

(6) In the portable terminal device authentication system according to any one of the aspects (2), (4), and (5), the in-vehicle side control unit may cause the in-vehicle side transmission unit to transmit the authentication signal at a transmission time which is irregularly determined in a predetermined pattern.

According to the aspect (6), the portable terminal device authentication system uses an authentication signal at a transmission time that is irregularly determined in a predetermined pattern in the authentication processing, and thus it is possible to improve authentication security.

(7) According to another aspect of the invention, there is provided an in-vehicle device including: an in-vehicle side transmission unit configured to transmit a request signal; an in-vehicle side reception unit configured to receive an answer signal; and an in-vehicle side control unit configured to cause the in-vehicle side transmission unit to transmit the request signal and determine validity of the answer signal that is received by the in-vehicle side reception unit. The in-vehicle side control unit generates a plurality of instruction signals which are different in a duty ratio, and supplies the instruction signals which are generated to the in-vehicle side transmission unit in correspondence with the request signal. The in-vehicle side transmission unit generates an authentication signal with signal intensity corresponding to the duty ratio of the plurality of instruction signals which are supplied, and transmits the request signal including the authentication signal to the portable terminal device.

According to the aspect (7), the in-vehicle side control unit generates a plurality of signals which are different in a duty ratio, supplies the signals which are generated to the in-vehicle side transmission unit in correspondence with the request signal, and transmits an authentication signal with signal intensity corresponding to the duty ratio from the in-vehicle side transmission unit. The in-vehicle side control unit determines whether or not the portable side reception unit receives a normal request signal in communication on the basis of a determination result of a plurality of authentication signals. As a result, the in-vehicle device system can improve authentication security by adjusting the intensity of the authentication signal that is transmitted.

[Advantageous Effects of Invention]

According to the aspects of the invention, it is possible to provide a portable terminal device authentication system capable of improving operability of authentication processing, an in-vehicle device, and a portable terminal device.

[Brief Description of Drawings]

Fig. 1 is a configuration diagram illustrating a portable terminal device authentication system according to this embodiment.
Fig. 2 is a view illustrating an example of a configuration of an in-vehicle side transmission unit.
Fig. 3 is a view illustrating an example of a configuration of a portable side reception unit.
Fig. 4 is a view illustrating a frame structure of a request signal that is transmitted by LF communication according to this embodiment.
Fig. 5 is a flowchart illustrating an example of a processing flow of an in-vehicle side control unit.
Fig. 6 is a view illustrating an example of a transmission pattern information table that stores a transmission pattern.
Fig. 7 is a flowchart illustrating an example of a processing flow of a portable side control unit.
Fig. 8 is a view illustrating signal measurement processing of the portable side control unit in step S220 in Fig. 7.
Fig. 9 is a flowchart illustrating an example of a signal measurement processing flow.
Fig. 10 is a timing chart illustrating an example of an operation timing of each unit of the in-vehicle side control unit.
Fig. 11 is a view illustrating a frame structure of an answer signal that is transmitted by RF communication according to this embodiment.
Fig. 12 is a view illustrating a relationship between a signal including a pulse string of which DUTY is set to 50% and signal intensity according to this embodiment.
Fig. 13 is a view (first view) illustrating a relationship between a signal including a pulse string of which DUTY is set to another value different from 50% and signal intensity according to this embodiment.
Fig. 14 is a view (second view) illustrating a relationship between a signal including a pulse string of which DUTY is set to still another value different from 50% and signal intensity according to this embodiment.
Fig. 15 is a view illustrating a difference in signal intensity of a frequency $f_1$ as illustrated in Fig. 12 to Fig. 14 according to this embodiment.
Fig. 16 is a view (first view) illustrating an effect by the portable terminal device authentication system according to this embodiment.
Fig. 17 is a view (second view) illustrating an effect by the portable terminal device authentication system according to this embodiment.

[Description of Embodiments]

Hereinafter, embodiments of the invention will be described on the basis of an example of the invention as illustrated in the accompanying drawings.

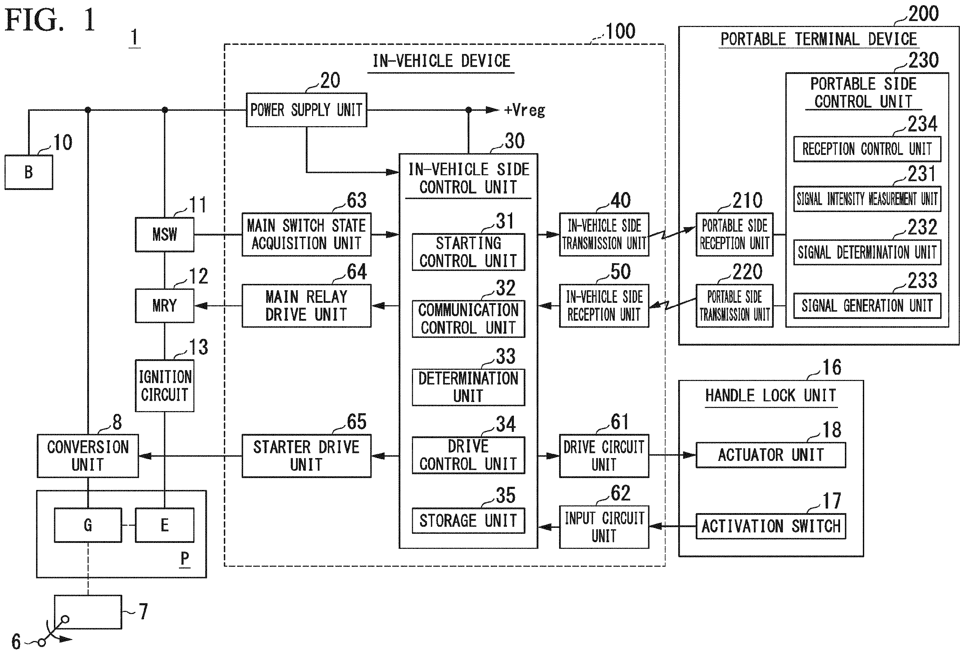

Fig. 1 is a configuration diagram illustrating a portable terminal device authentication system 1 according to this embodiment. The portable terminal device authentication system 1 illustrated in the drawing is applied to a vehicle such as an automobile and a motor-mounted bicycle, and restricts use when the vehicle is locked. The portable terminal device authentication system 1 can drive devices corresponding to control targets such as locking, unlocking, engine starting, and the like of a vehicle by authenticating a portable terminal device 200 without using a mechanical key.
For example, a power unit P, which includes an engine E and a transmission (not illustrated), is pivotably supported to a vehicle body frame of a scooter V that is a small-sized vehicle, and a rear wheel WF, which is driven by the power unit P, is pivotably supported to a rear portion of the power unit P. In a locked state, driving of the power unit P is restricted (driving-restricted state). A handle H is provided at a front portion of the vehicle body frame of the scooter V, and the handle H is supported in a manner capable of adjusting a direction of a front wheel WR through a connecting shaft. In a locked state, with regard to the handle H, rotation of the connecting shaft is restricted by a handle lock unit 16. The handle lock unit 16 includes an actuator unit 18 including a mechanism that restricts rotation of the connecting shaft.
Furthermore, the power unit P is provided with a kick operation unit 7 that can drive a generator G included in the power unit P by a pedaling operation of the kick pedal 6. For example, in a case where a battery is discharged, the scooter V can use electric power obtained through power generation by a kick operation of the kick operation unit 7.

A battery B is mounted on the scooter V, and a starting method of the power unit P is changed in correspondence with a charge state (terminal voltage) of the battery B.

Electric power, which is generated by the generator G, is supplied to the battery B through a conversion unit 8. In a case where the engine E is being driven, the generator G is driven by the engine E. For example, the battery B is charged by electric power that is output from the generator G by a pedaling operation of the kick pedal 6 of the kick operation unit 7. In this case, the conversion unit 8 functions as a rectifier and a regulator.

In addition, electric power, which is stored in the battery B, may be supplied to the generator G, and the generator G may be used as a starter of the engine E. In this case, the conversion unit 8 supplies electric power to allow the generator G to function as a motor.

In addition, ignition electric power is supplied to an ignition plug (not illustrated), which is provided in the engine E, from an ignition circuit 13 in correspondence with a state of a main relay (MRY) 12.

However, for example, in a case where the portable terminal device 200 is verified as a normal object corresponding to the scooter V, an in-vehicle device 100 releases various restriction states. The various restriction states include locking of the handle H, and drive restriction of the power unit P. Furthermore, when "the portable terminal device 200 is a normal object corresponding to the scooter V," it may be stated that "the portable terminal device 200 is valid".

(Configuration of In-Vehicle Device 100)

The in-vehicle device 100 includes a power supply unit 20, an in-vehicle side control unit 30, an in-vehicle side transmission unit 40, an in-vehicle side reception unit 50, a drive circuit unit 61, an input circuit unit 62, a main switch state acquisition unit 63, and a main relay drive unit 64. In addition, the in-vehicle device 100 may include a starter drive unit 65.

The power supply unit 20 sets the battery B and the generator G as a power supply, stabilizes a terminal voltage of the battery B on the basis of "voltage + Vreg," and supplies the terminal voltage to respective units such as the in-vehicle side control unit 30. The respective units such as the in-vehicle side control unit 30 use a stabilized DC voltage as a power supply. The power supply unit 20 monitors a voltage drop that is equal to or lower than a predetermined threshold voltage VTH in the terminal voltage of the battery B, and outputs the detection result.

The in-vehicle side transmission unit 40 transmits a request signal for calling the portable terminal device 200. A signal, which is transmitted from the in-vehicle side transmission unit 40, may be referred to as "LF signal". The request signal (LF signal) includes identification information (hereinafter, referred to as "portable terminal device identification information") that specifies the portable terminal device 200, and information (hereinafter, referred to as "authentication information") for a plurality of kinds of authentication processing.

In this embodiment, for simplification of explanation, description will be made with reference to three kinds of information including first authentication information, second authentication information, and third authentication information as a plurality of pieces of authentication information included in the request signal, but the authentication information is not limited to the information. For example, fourth authentication information and the like may be included in the request signal. The authentication information is an example of "authentication signal".

The in-vehicle side reception unit 50 receives a signal that is transmitted by an external device. For example, the in-vehicle side reception unit 50 receives a signal that is transmitted by the portable terminal device 200. Hereinafter, a signal, which is transmitted from the portable terminal device 200 and is received by the in-vehicle side reception unit 50, may be referred to as "RF signal" in description. A carrier frequency of the RF signal is relatively higher than a carrier frequency of the above-described LF signal.

The drive circuit unit 61 drives the actuator unit 18 in a conduction state of the main switch 11. For example, the main switch 11 enters a conduction state or a non-conduction state by a physical key (key). Furthermore, the actuator unit 18 is included in the handle lock unit 16 that locks the handle H to disable travelling of a vehicle, and switches between a locked state and an unlocked state of the handle lock unit 16.

In a case where the main switch 11 is in a conduction state, the drive circuit unit 61 drives the actuator unit 18 to unlock the handle H, thereby retaining the unlocked state. In addition, in a case where the main switch 11 enters a non-conduction state, the drive circuit unit 61 drives the actuator unit 18 to lock the handle H, and retains the locked state.

The input circuit unit 62 receives a signal transmitted from an activation switch 17. For example, the activation switch 17 is provided in the handle H, and is operated by a passenger to enter an on state or an off state.

The main switch state acquisition unit 63 acquires a conduction state of the main switch 11 of which conduction is realized in correspondence with the operation by the passenger.

The main relay drive unit 64 switches between an on state and an off state of the main relay 14 by control of the in-vehicle side control unit 30.

The starter drive unit 65 supplies a drive signal for starting the power unit P by control from the in-vehicle side control unit 30. For example, the starter drive unit 65 supplies a drive signal when using the generator G as a starter of the engine E to the conversion unit 8.

The in-vehicle side control unit 30 includes a starting control unit 31, a communication control unit 32, a determination unit 33, a drive control unit 34, and a storage unit 35. Part or the entirety of the starting control unit 31, the communication control unit 32, the determination unit 33, and the drive control unit 34 are software function units which function when a processor such as a central processing unit (CPU) executes a program. In addition, some or all of the units may be hardware function units such as a large scale integration (LSI) and an application specific integrated circuit (ASIC). In addition, the storage unit 35 is realized by a read only memory (ROM), a random access memory (RAM), a hard disk drive (HDD), a flash memory, and the like. The program, which is executed by the processor, may be stored in the storage unit 35 in advance, or may be downloaded from an external device. In addition, a portable storage medium which stores the program may be mounted on a drive device (not illustrated) to install the program in the storage unit 35.

For example, the storage unit 35 stores a program that allows the respective units of the in-vehicle side control unit 30 to function, identification information of the portable terminal device 200 corresponding to the in-vehicle device 100, and the like.

The starting control unit 31 detects a transmission request for the request signal. For example, the transmission request for the request signal is caused by an operation of the activation switch 17, and the like. For example, in a case where the main switch 11 enters an off-state, that is, the handle H enters a locked state (a state in which traveling of a vehicle is disabled), and the activation switch 17 is in the on state, the starting control unit 31 detects the transmission request for the request signal.

In a case where the transmission request for the request signal is detected by the starting control unit 31, the communication control unit 32 controls the in-vehicle side transmission unit 40 to transmit the request signal. More specifically, in a case where the main switch 11 enters the off state, that is, the handle H enters the locked state (the state in which traveling of a vehicle is disabled), when the activation switch 17 enters an on-state, the communication control unit 32 causes the in-vehicle side transmission unit 40 to transmit the request signal.

Furthermore, in a situation in which the communication control unit 32 causes the in-vehicle side transmission unit 40 to transmit the request signal, it is assumed that electric power necessary when transmitting the request signal in response to the transmission request for the request signal is stored in the battery B.

On the other hand, in a case where electric power necessary for transmission of the request signal is not stored in the battery B, the main switch 11 enters an on-state, and thus the kick operation unit 7, which drives the generator G from which electric power is supplied to the in-vehicle device 100, is operated. The in-vehicle side control unit 30 waits until the necessary electric power is stored in the battery B.

The determination unit 33 decodes a signal that is received by the in-vehicle side reception unit 50, and determines whether or not the signal received by the in-vehicle side reception unit 50 is a signal with respect to the request signal on the basis of the decoding result. Hereinafter, the signal with respect to the request signal is referred to as "answer signal".

For example, in a case where the signal received by the in-vehicle side reception unit 50 can be determined as an answer signal transmitted by the portable terminal device 200 that is a transmission destination of the request signal, the determination unit 33 determines that a device (in this case, the portable terminal device 200), which is a reception source of the in-vehicle side reception unit 50, is a predetermined normal device, and determines that authentication succeeds. The determination unit 33 determines that a combination of the in-vehicle device 100 and the portable terminal device 200 is valid, and at least one of the in-vehicle device 100 and the portable terminal device 200 is valid in accordance with the determination result.

On the other hand, in a case where it is difficult to determine the signal received by the in-vehicle side reception unit 50 as the answer signal that is transmitted by the portable terminal device 200 that is a transmission destination of the request signal, the determination unit 33 determines that a device that is a reception source of the in-vehicle side reception unit 50 is not a predetermined normal device, and determines that authentication fails. For example, in a case where a signal is transmitted from a device different from the portable terminal device 200, the determination unit 33 determines that the device is not the normal device. The determination unit 33 determines that a combination of the in-vehicle device 100 and the portable terminal device 200 is not valid, and at least one of the in-vehicle device 100 and the portable terminal device 200 is not valid on the basis of the determination result.

In addition, the determination unit 33 determines an operation state of the activation switch 17 on the basis of a signal that is input from the input circuit unit 62

In addition, the determination unit 33 determines whether or not a signal is received by the in-vehicle side reception unit 50.

The drive control unit 34 controls a lock state of the handle H and starting restriction of the engine E in correspondence with the determination result of the determination unit 33. For example, in a case where the determination unit 33 determines that authentication succeeds, that is, a signal received by the in-vehicle side reception unit 50 is an answer signal that is transmitted by the portable terminal device 200 that is a transmission destination of the request signal, the drive control unit 34 releases the locked state of the handle, and releases the starting restriction of the engine E. For example, the drive control unit 34 drives the actuator unit 18 of the handle lock unit 16 through the drive circuit unit 61 to release the locked state of the handle. The drive control unit 34 starts the engine E by driving the generator G through the starter drive unit 65.

Configuration of portable terminal device 200

The portable terminal device 200 is authenticated by the in-vehicle device 100. The storage unit 35 of the in-vehicle device 100 stores identification information of the portable terminal device 200. The portable terminal device 200 includes a portable side reception unit 210, a portable side transmission unit 220, and a portable side control unit 230.

The portable side reception unit 210 receives a request signal that is transmitted by the in-vehicle device 100. The portable side transmission unit 220 transmits an answer signal, which is generated by the portable side control unit 230, to the in-vehicle device 100 that is a reception source of the request signal. Furthermore, the portable side reception unit 210 may be configured to have a sensitivity characteristic (directivity) in which a plurality directions different from each other are set as axes.

For example, the portable side control unit 230 includes a signal intensity measurement unit 231, a signal determination unit 232, a signal generation unit 233, and a reception control unit 234. The signal intensity measurement unit 231 measures signal intensity of a request signal that is received by the portable side reception unit 210. Furthermore, in a case where the portable side reception unit 210 has the sensitivity characteristic in which a plurality of direction different from each other are set as axes, the signal intensity measurement unit 231 may measure the signal intensity, which is detected for the plurality of axes, for every axis.

The signal determination unit 232 determines a request signal that is received by the portable side reception unit 210 on the basis of the measurement result by the signal intensity measurement unit 231. The signal generation unit 233 generates an answer signal corresponding to the request signal received by the portable side reception unit 210, and causes the portable side transmission unit 220 to transmit the answer signal. The reception control unit 234 performs control so that the request signal transmitted by the in-vehicle device 100 can be received on the basis of a result that is received by the portable side reception unit 210. Furthermore, in a case where the portable side reception unit 210 has the sensitivity characteristic in which a plurality of directions different from each other are set as axes, the signal determination unit 232 may arrange measurement results of signals detected for the plurality of axes by the signal intensity measurement unit 231 and may determine the measurement results after the arrangement.

Furthermore, some or all of the portable side reception unit 210, the portable side transmission unit 220, and the portable side control unit 230 may be set as software function units which function when a processor such as a CPU executes a program. In addition, some or all of the units may be a hardware function unit such as an LSI or an ASIC. In addition, the portable side control unit 230 may include a storage unit (not illustrated), or the storage unit may be realized by a ROM, a RAM, an HDD, a flash memory, and the like. The program, which is executed by the processor, may be stored in the storage unit in advance, or may be downloaded from an external device. In addition, a portable storage medium, which stores the program, may be mounted on a drive device (not illustrated) to install the program in the storage unit.

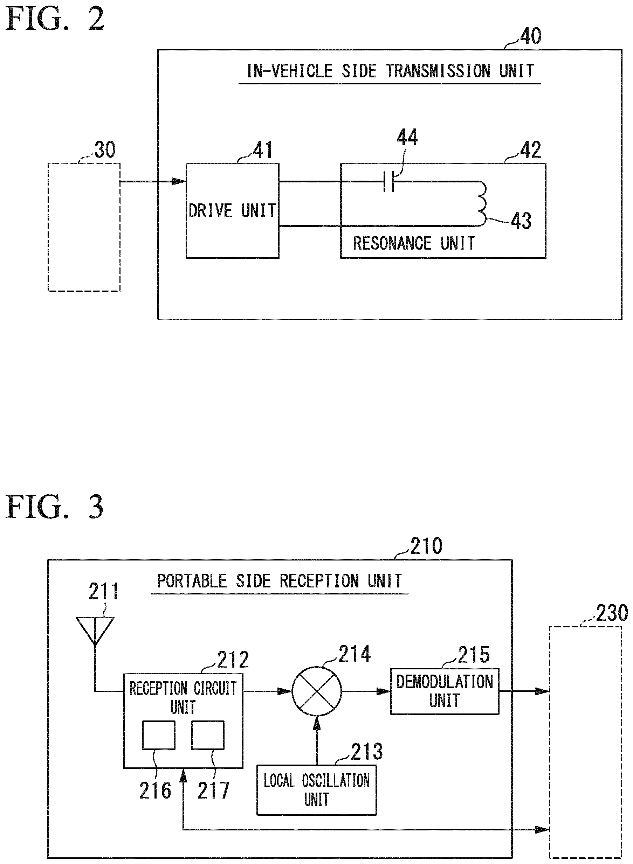

Fig. 2 is a view illustrating an example of a configuration of the in-vehicle side transmission unit 40. For example, the in-vehicle side transmission unit 40 includes a drive unit 41 and a resonance unit 42. The drive unit 41 amplifies electric power of a signal that is supplied from the in-vehicle side control unit 30 and drives the resonance unit 42. The resonance unit 42 includes a transmission antenna 43 and a capacitor 44. The transmission antenna 43 includes a coil, and forms, for example, an LC-type resonance circuit in combination with the capacitor 44. The resonance unit 42 that is illustrated in the drawing is constituted by a serial resonance circuit. Furthermore, a resonance frequency of the resonance unit 42 is indicated by f0. The transmission antenna 43 radiates electrical waves, which are generated by energy due to resonance of the resonance unit 42, into the atmosphere.

The in-vehicle side transmission unit 40 having the above-described configuration functions as a band-pass filter in which the resonance frequency f0 is set as a central frequency. For example, signals, which are supplied from the in-vehicle side control unit 30 to the in-vehicle side transmission unit 40, may be pulse signals (digital signals) which repeat in accordance with a predetermined period T, and a waveform thereof may be rectangular shape. It is assumed that a reciprocal (1/T) of the period T of the pulse signal is determined to be a predetermined value (frequency f1) in the vicinity of the resonance frequency f0.

The resonance unit 42 attenuates components in a band other than a desired band in which the resonance frequency f0 is set as the central frequency.

Furthermore, signals, which form the pulse signal string, include a component of a frequency f1 in the vicinity of the resonance frequency f0, and a harmonic component in which the frequency f1 is set as a basic frequency. When the resonance unit 42 attenuates the harmonic component, a transmission frequency band of electrical waves transmitted from the in-vehicle side transmission unit 40 is restricted.

For example, the in-vehicle side control unit 30 generates a signal DMOD that is a signal for generating a signal of a modulation method such as amplitude-shift keying (ASK) and phase-shift keying (PSK), and supplies the signal DMOD to the in-vehicle side transmission unit 40. The signal DMOD includes a pulse signal string of the frequency f1. For example, in a case where the modulation method is set to the ASK, the communication control unit 32 selects any one of 50% and 0% (or any one of 50% and 100%) as DUTY (duty ratio) of the signal DMOD in correspondence with a logic (1 or 0) of data that is transmitted, and supplies the signal DMOD of selected DUTY to the in-vehicle side transmission unit 40. Alternatively, in a case where the modulation method is set to binary phase-shift keying (BPSK) that is one method of the PSK, the communication control unit 32 controls and inverts a phase of the signal DMOD in correspondence with a logic (1 or 0) of data that is transmitted by setting DUTY of the signal DMOD to 50%. The communication control unit 32 supplies the signal MOD of which a phase is controlled to the in-vehicle side transmission unit 40.

As the modulation method of a signal transmitted from the in-vehicle side transmission unit 40, methods other than the above-described methods may be appropriately used. In addition, as the modulation method, a plurality of kinds of modulation methods can be selected, and the modulation methods may be changed into time division.

When generating an authentication signal, the in-vehicle side control unit 30 may select a value different from the above-described value as DUTY of the signal DMOD in some cases. Details of a DUTY control of the signal DMOD for generating the authentication signal will be described later.

Fig. 3 is a view illustrating an example of a configuration of the portable side reception unit 210. For example, the portable side reception unit 210 includes a reception antenna 211, a reception circuit unit 212, a local oscillation unit 213, a mixer 214, and a demodulation unit 215.

The reception circuit unit 212 performs amplification, noise removal, offset adjustment, filtering processing, and the like with respect to a signal received by the reception antenna 211, and outputs the signal to the mixer 214. For example, the reception circuit unit 212 includes an offset measurement unit 216, a variable gain amplification unit (hereinafter referred to as "VGA") 217. The VGA 217 amplifies the signal with a gain corresponding to a control. For example, the signal, which is amplified by the VGA 217, is a signal that is generated from a signal received by the reception antenna 211, and may be a signal of which signal offset is measured by the offset measurement unit 216. The VGA 217 amplifies the signal, which is generated from the signal received by the reception antenna 211, with a desired gain to adjust the signal to an electric power level when being supplied to the mixer 214. The offset measurement unit 216 measures an offset of a signal that is amplified with a desired gain by the VGA 217.

The mixer 214 converts a frequency of a signal output by the reception circuit unit 212 on the basis of a signal output by the local oscillation unit 213. For example, the mixer 214 outputs a bit signal generated from a difference between the frequency of the signal output by the reception circuit unit 212 and a frequency of the signal output by the local oscillation unit 213 to the demodulation unit 215.

With respect to the signal output by the mixer 214, the demodulation unit 215 performs demodulation for the above-described modulation method of the in-vehicle side transmission unit 40, and outputs a demodulated signal to the portable side control unit 230.

(Frame Structure of Request Signal)

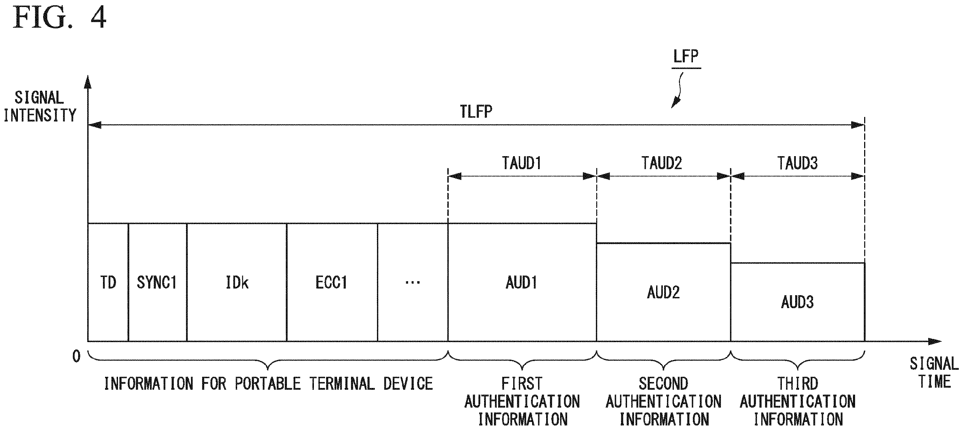

Description will be given of a frame structure of the request signal that is transmitted by the LF communication according to this embodiment with reference to Fig. 4. Fig. 4 is a view illustrating a frame structure of the request signal that is transmitted by the LF communication according to this embodiment. Hereinafter, the frame structure of the request signal is referred to as a "pattern LFP" in the description.

Time necessary for frame transmission of the pattern LFP is noted as TLFP. For example, as described in Fig. 4, the pattern LFP includes information for the portable terminal device, and authentication information. The information for the portable terminal device includes at least training data TD, a synchronization pattern SYNC1, and identification information IDk. The authentication information includes first authentication information AUD1, second authentication information AUD2, and third authentication information AUD3. In addition, the information for the portable terminal device may include data such as error correction information ECC1.

The training data TD is disposed to be transmitted first when the in-vehicle side transmission unit 40 transmits the pattern LFP. A signal pattern, which is necessary for adjustment of the portable side reception unit 210 when the portable terminal device 200 receives the pattern LFP, is allocated to the training data TD. Furthermore, the training data TD may be referred to as a "preamble."

For example, the synchronization pattern SYNC1 is disposed to be transmitted subsequently to the training data TD by the in-vehicle side transmission unit 40. The synchronization pattern SYNC1 includes a signal pattern that is used as an index when extracting various pieces of information after the portable side reception unit 210 terminates training by the training data TD, and information for identification of a pattern type.

The identification information IDk is identification information that specifies a portable terminal device corresponding to a transmission destination (destination) of the pattern LFP.

The error correction information ECC1 is information that is used to perform error detection or error correction of each piece of data such as the identification information IDk that is received in the pattern LFP. The error correction information ECC1 can appropriately determine a target range of error detection or error correction, a method of error detection or error correction, and the like for every pattern type.

For example, the first authentication information AUD1, the second authentication information AUD2, and the third authentication information AUD3, which are included in the pattern LFP, represent information (an encryption key, encrypted text, and the like) that is necessary for authentication processing. A typical algorithm is applicable to the authentication processing method. With regard to the authentication processing, information encrypted in the in-vehicle device 100 is decoded by the portable terminal device 200, and determination of the decoded information may be performed by any one of the portable terminal device 200 and the in-vehicle device 100. The following embodiment exemplifies a case where information necessary for the authentication processing is applied to amplitudes of signals of the first authentication information AUD1, the second authentication information AUD2, and the third authentication information AUD3.

(Processing of In-Vehicle Side Control Unit 30)

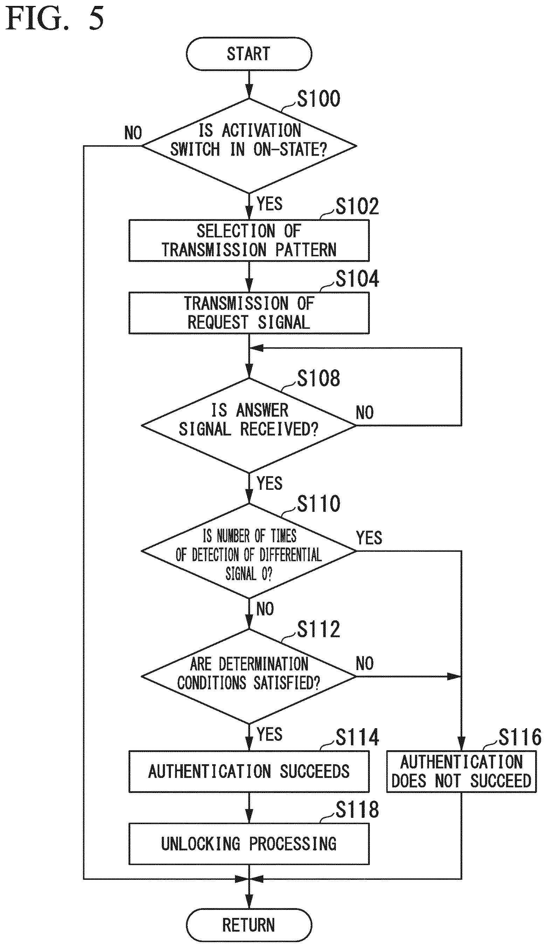

Hereinafter, processing of the in-vehicle side control unit 30 according to this embodiment will be described with reference to Fig. 5. Fig. 5 is a flowchart illustrating an example of a processing flow of the in-vehicle side control unit 30. It is assumed that the processing in this flowchart is carried out in a state in which the main switch 11 is in an off state, that is, the handle H is in a locked state (a state in which traveling of a vehicle is disabled).

First, the determination unit 33 determines an operation state of the activation switch 17 on the basis of a signal that is input from the input circuit unit 62 (step S100). In a case where the activation switch 17 is in an off-state, the in-vehicle side control unit 30 terminates the processing in this flowchart.

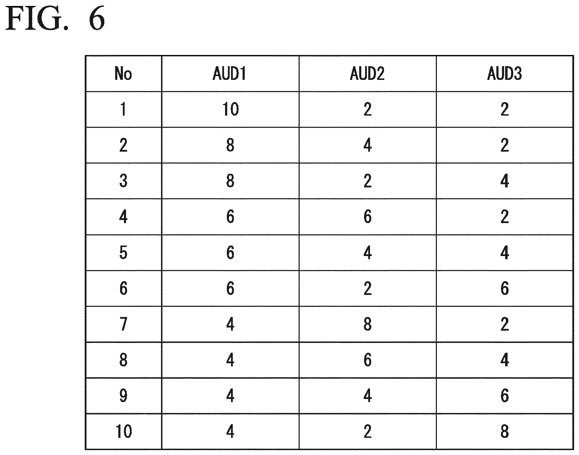

On the other hand, in a case where the activation switch 17 is in an on-state, the communication control unit 32 selects a transmission pattern of the request signal with reference to a transmission pattern information table (Fig. 6) (step S102).

For example, the information that determines the transmission pattern includes information such as the kind of authentication information, and time for which transmission of the authentication information continues. The information such as the kind of the authentication information and the time for which transmission of the authentication information continues is stored in the transmission pattern information table as information indicating the transmission pattern.

The communication control unit 32 selects a transmission pattern of authentication information, which is applied to the request signal, from the transmission pattern stored in the transmission pattern information table.

The communication control unit 32 adjusts time for which DUTY of the signal DMOD is continued on the basis of the transmission pattern that is determined. In addition, the communication control unit 32 determines DUTY of the signal DMOD, which is supplied in a period for which transmission of the authentication information continues, from the information that specifies the kind of the authentication information. The communication control unit 32 adjusts DUTY of the signal DMOD when transmitting each piece of authentication information to change signal intensity of the request signal. For example, in a case where the first authentication information AUD1, the second authentication information AUD2, and the third authentication information AUD3 are provided, the communication control unit 32 determines DUTY of the signal DMOD so that signal intensity of an electrical wave when the first authentication information AUD1 is transmitted, signal intensity of an electrical wave when the second authentication information AUD2 is transmitted, and signal intensity of an electrical wave when the third authentication information AUD3 is transmitted become different from each other.

Next, the communication control unit 32 transmits the request signal (step S104). For example, the communication control unit 32 transmits the request signal in accordance with any one of a plurality of transmission patterns which are determined in advance.

For example, the communication control unit 32 determines a transmission pattern, which defines time TAUD1 at which the first authentication information AUD1 is transmitted, time TAUD2 at which the second authentication information AUD2 is transmitted, and time TAUD3 at which the third authentication information AUD3 is transmitted, in advance, and stores the transmission pattern in the storage unit 35. Fig. 6 is a view illustrating an example of the transmission pattern information table that stores the transmission pattern. The transmission pattern information table stores time (milliseconds) for transmitting the time TAUD1 at which the first authentication information AUD1 is transmitted, the time TAUD2 at which the second authentication information AUD2 is transmitted, and the time TAUD3 at which the third authentication information AUD3 is transmitted. For example, the communication control unit 32 irregularly determines the transmission pattern by using a random number when selecting the transmission pattern from the transmission pattern information table. At this time, values of the time TAUD1, the time TAUD2, and the time TAUD3 may be the same as each other, or may be different from each other. According to this, the communication control unit 32 can improve confidentiality of information relating to the time TAUD1, the time TAUD2, and the time TAUD3.

The communication control unit 32 stores the information relating to the time TAUD1, the time TAUD2, and the time TAUD3, which are determined, in the storage unit 35, and when setting the time TAUD1, the time TAUD2, and the time TAUD3 again, for example, the communication control unit 32 overwrites information of the time TAUD1, the time TAUD2, and the time TAUD3, which are set at this time, on the information which is previously stored. That is, whenever setting the time TAUD1, the time TAUD2, and the time TAUD3, the communication control unit 32 updates the information of the time TAUD1, the time TAUD2, and the time TAUD3 in the storage unit 35.

In addition, the communication control unit 32 transmits a request signal of a frame structure as illustrated in Fig. 4 as an example to the portable terminal device 200. The communication control unit 32 sets DUTY of a signal that is output to DUTY determined on the basis of the transmission pattern, and causes the in-vehicle side transmission unit 40 to transmit information for the portable terminal device.

For example, the communication control unit 32 sets DUTY of a signal that is output to a predetermined DUTY1, and causes the in-vehicle side transmission unit 40 to transmit the first authentication information AUD1 for the time TAUD1.

In addition, the communication control unit 32 sets DUTY of a signal that is output to a predetermined DUTY2, and causes the in-vehicle side transmission unit 40 to transmit the second authentication information AUD2 for the time TAUD2.

In addition, the communication control unit 32 sets DUTY of a signal that is output to a predetermined DUTY3, and causes the in-vehicle side transmission unit 40 to transmit the third authentication information AUD3 for the time TAUD3.

The communication control unit 32 transmits the request signal on the basis of DUTY (DUTY 1, DUTY2, and DUTY3) and the transmission time (time TAUD1, TAUD2, and TAUD3) which is set as described above to the portable terminal device 200.

Next, the determination unit 33 determines whether or not an answer signal is received by the in-vehicle side reception unit 50 (step S108). In a case where the answer signal is not received by the in-vehicle side reception unit 50, the in-vehicle side control unit 30 waits until the answer signal is received.

On the other hand, in a case where the answer signal is received by the in-vehicle side reception unit 50, the determination unit 33 determines whether or not the number of times of detection of a differential signal (the number of times of differential signal detection) is zero from information indicating a reception result of authentication information as information included in the answer signal received by the in-vehicle side reception unit 50 (step S110). The differential signal in the above-described case represents the second authentication information AUD2 or the third authentication information AUD3 with respect to the first authentication information AUD1. The differential signal is a signal except for a signal of which reception signal intensity (signal intensity value) is equal to or less than reception signal intensity (signal intensity value) of the first authentication information AUD1 by a predetermined amount and which is treated as an invalid signal of which reception signal intensity (signal intensity value) is small.

The determination unit 33 determines whether or not a determination condition is satisfied on the basis of the information of the signal that is received by the in-vehicle side reception unit 50 (step S112). For example, the determination condition is a condition (determination condition) that is set as a reference in determination of the portable terminal device 200 that is a communication counterpart of the in-vehicle side reception unit 50, and in determination as to whether or not a signal received by the portable terminal device 200 is a normal request signal from the answer signal that is received from the portable terminal device 200. For example, in a case where the determination condition is satisfied, the determination unit 33 determines that the signal received by the portable terminal device 200 is a normal request signal, and the portable terminal device 200 from which the answer signal is transmitted is a normal device, and determines that authentication of the portable terminal device 200 succeeds. Examples of the determination condition include "case where the number of times of detection as an invalid signal is zero", "case where the number of times determined with respect to time at which the first authentication information AUD1 is transmitted, and the number of times of determination of the reception signal intensity of the first authentication information AUD1 as approximately the same intensity match each other," and the like.

In a case where the above-described determination condition is satisfied, the determination unit 33 determines that the signal received by the in-vehicle side reception unit 50 is the answer signal that is transmitted by the portable terminal device 200 that is a transmission destination of the request signal. In a case where a situation in which portable device ID information included in the answer signal is consistent, a situation in which RSSI intensity (reception intensity of the first authentication information AUD1) is equal to or greater than a predetermined threshold value, a situation in which encryption data obtained by decoding the encryption data is consistent, and the like can be detected in combination with the above-described determination, the determination unit 33 determines that the portable terminal device 200 that is a communication counterpart of the in-vehicle side reception unit 50 is a normal device, and determines that authentication thereof succeeds (step S114).

On the other hand, in a case where the number of times of detection of the differential signal (differential signal detection number-of-times) is one or more times, or in a case where the above-described determination condition is not satisfied, the determination unit 33 determines that the signal received by the in-vehicle side reception unit 50 is not the answer signal transmitted by the portable terminal device 200 that is a transmission destination of the request signal. The determination unit 33 determines that the device that is a communication counterpart of the in-vehicle side reception unit 50 is not a normal device, and determines that authentication fails. That is, in the portable terminal device authentication system according to this embodiment, even when consistency of the portable device ID information and the like are confirmed (even when communication with a normal portable device is performed through a relay attack using a relay) in the determination unit 33, if a transmission time and a reception time of the authentication information are not consistent, it is determined that the device that is a communication counterpart of the in-vehicle side reception unit 50 is not a normal device (step S116).

After processing in step S114, the in-vehicle side control unit 30 (the drive control unit 34) controls to drive a drive unit (solenoid) of a respective unit so as to release a locked state of the respective unit (step S118). According to this, the processing in this flowchart is terminated.

(Processing of Portable Side Control Unit 230)

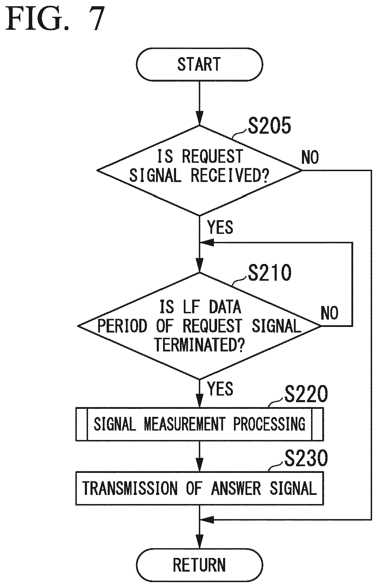

Hereinafter, description will be given of processing of the portable side control unit 230 according this embodiment with reference to Fig. 7 to Fig. 11.

Fig. 7 is a flowchart illustrating an example of a processing flow of the portable side control unit 230.

First, the portable side control unit 230 performs request signal reception processing. In the request signal reception processing, reception sensitivity characteristics of the portable side reception unit 210 of the portable terminal device 200 are optimized. As the request signal reception processing, for example, the portable side control unit 230 determines whether or not reception of the request signal is initiated by the portable side reception unit 210 (step S205). In a case where reception of the request signal is not initiated by the portable side reception unit 210, the processing of this flowchart is terminated.

On the other hand, in a case where reception of the request signal is initiated by the portable side reception unit 210, the signal determination unit 232 determines whether or not reception of the first authentication information AUD1 is initiated in the frame structure (pattern LFP) of the request signal, that is, a period of the information (LF data) for the portable terminal device is terminated in the frame structure of the request signal (step S210).

For example, the signal determination unit 232 initiates counting of time in correspondence with initiation of reception of the request signal, that is, initiation of the information of the portable terminal device in the frame structure of the request signal, and determines that the period of the information (LF data) for the portable terminal device is terminated when the period of information for the portable terminal device expires.

The signal determination unit 232 waits until the period of the LF data of the request signal expires. On the other hand, after the period of the LF data of the request signal expires, the portable side control unit 230 performs signal measurement processing (step S220). Details of the signal measurement processing will be described later.

Next, the signal generation unit 233 generates an answer signal having a predetermined frame structure and causes the portable side transmission unit 220 to transmit the answer signal (step S230). According to this, the processing of this flowchart is terminated.

With regard to a signal of which intensity varies, the portable side control unit 230 automatically sets a threshold value with respect to subsequent reception intensity on the basis of intensity of a signal that is received for the first time, and determines whether or not the intensity of a plurality of signals varies at a certain degree that is expected.

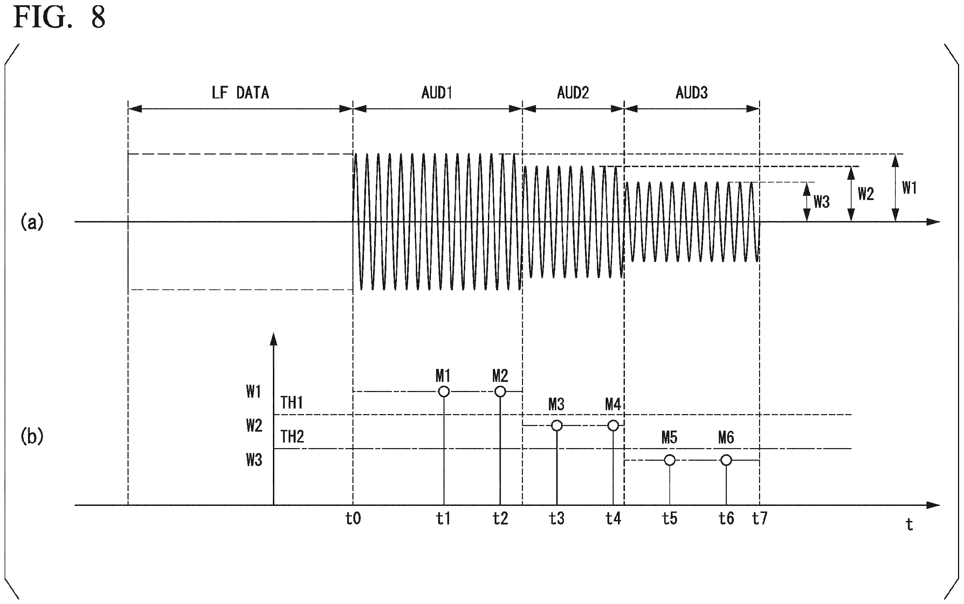

Fig. 8 is a view illustrating signal measurement processing of the portable side control unit 230 in step S220. In the same drawing, a request signal, which is received by the portable terminal device 200 that is set as a signal measurement processing target, is illustrated.

Description will be given of processing that is carried out in a period from time t0 to time t7 for which the first authentication information AUD1, the second authentication information AUD2, and the third authentication information AUD3 are observed in the request signal. The portable side control unit 230 performs a plurality of times of measurement in the period from the time t0 to time t7. For example, in the following description, description will be given of a case where measurement is performed six times in a manner of being divided into M1 to M6 as illustrated in the same drawing as an example. With regard to time at which each measurement is performed, the measurement is performed at time t1 to time t6 with t0 set as a reference. In time t1 to time t6, duration from time t0 to time t1 is determined as time T1, and duration after time t1 is determined as a period T2.

A schematic signal waveform is illustrated in (a) of Fig. 8. Amplitudes of the first authentication information AUD1, the second authentication information AUD2, and the third authentication information AUD3 are observed as W1, W2, and W3. In a case where each of the first authentication information AUD1, the second authentication information AUD2, and the third authentication information AUD3 is received as a prescribed signal, a relationship of W1>W2>W3 is satisfied.

An amplitude detection value detected in each measurement time is illustrated in (b) of Fig. 8. Detection values in measurement time M1 at time t1 and in measurement time M2 at time t2 are W1. Detection values in measurement time M3 at time t3 and in measurement time M4 at time t4 are W2. Detection values in measurement time M5 at time t5 and in measurement time M6 at time t6 are W3. The portable side control unit 230 determines a first threshold value TH1 and a second threshold value TH2 so that the following relationship in the following Expression (1) is established with the detection value W1 in M1 set as a reference.

$$TH1 = (W1-d1)$$

$$TH2 = (W1-d2)$$

$$W3 < TH2 < W2 < TH1 < W1 \ldots (1)$$

In Expression (1), d1 and d2 are determined in advance as a constant by the portable side control unit 230, and values thereof are stored, for example, in a storage unit (not illustrated) of the portable terminal device 200.

In the following description, d1 is referred to as a differential threshold value (first threshold value) capable of identifying a signal (second signal) of the detection value W2 of which an amplitude is smaller than that of a signal (first signal) of the detection value W1, and d2 is referred to as an invalid threshold value (second threshold value) capable of identifying a signal (third signal) of the detection value W3 of which an amplitude is smaller than that of the detection value W2.

Furthermore, in Expression (1), description has been given of an example in which the first threshold value TH1 and the second threshold value TH2 are calculated by the portable side control unit 230 through differential calculation, but may obtained by multiplying or dividing W1 by a predetermined coefficient. For example, the portable side control unit 230 may calculate the first threshold value TH1 and the second threshold value TH2 so that the first threshold value TH1 is set to 80% of W1 and the second threshold value TH2 is set to 50% of W1.

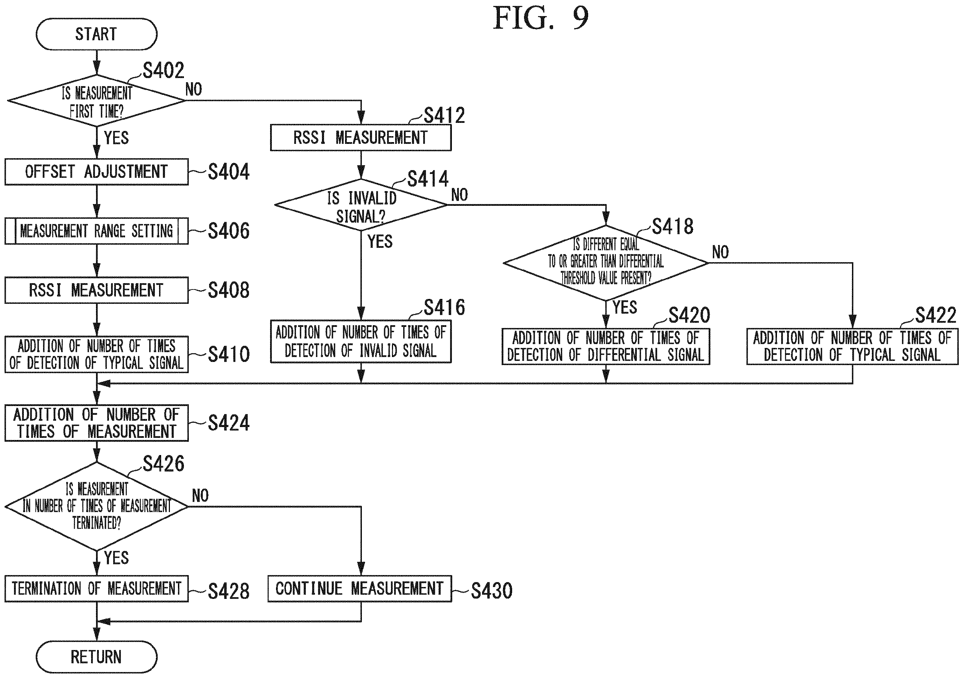

Fig. 9 is a flowchart illustrating an example of a signal measurement processing flow.

The portable side control unit 230 counts the number of times of measurement by using a measurement number-of-times counter that takes the value of 0 to N1. In the example illustrated in Fig. 8, N1 is six. The portable side control unit 230 counts the number of times of measurement, in which a measurement value is detected to satisfy a relationship of (TH1<W1), by using a typical signal detection number-of-times counter that takes the value of 1 to N2. The portable side control unit 230 counts the number of times of measurement, in which a measurement value is detected to satisfy a relationship of (TH2<W2<TH1) by using differential signal detection number-of-times counter that takes the value of 0 to N3. The portable side control unit 230 counts the number of times of measurement in which a measurement value is detected to satisfy a relationship of (W3<TH2) by using an invalid signal detection number-of-times counter that takes the value of 0 to N4. The "typical signal detection number-of-times counter", the "differential signal detection number-of-times counter", and the "invalid signal detection number-of-times counter" are defined as variables. For example, values thereof are stored in a storage region of a storage unit of the portable terminal device 200 (not illustrated). For example, a "measurement number-of-times counter", the "typical signal detection number-of-times counter", the "differential signal detection number-of-times counter", and the "invalid signal detection number-of-times counter" are set to 0, 1, 0, and 0 through initialization processing.

First, the portable side control unit 230 determines whether or not current measurement is the first time on the basis of a value of the measurement number-of-times counter (step S402). The value of the measurement number-of-times counter represents the number of times of measurement. For example, the portable side control unit 230 determines whether or not the value of the measurement number-of-times counter is 1.

In a case where it is determined that the current measurement is the first time through the determination in step S402, before the following first measurement is performed, the reception control unit 234 causes the offset measurement unit 216 to measure an offset of a signal corresponding to the first authentication information AUD1 in the frame structure (pattern LFP) of the request signal. Furthermore, in a case where an offset measurement value is not in a predetermined range, the reception control unit 234 adjusts the offset so that an offset value enters a desired range determined in advance by controlling the offset measurement unit 216 (step S404). When the offset measurement value that is measured again enters the predetermined range, the reception control unit 234 terminates the adjustment, and fixes the offset value to the resultant adjustment value until terminating a series of processing to be described below after the adjustment. The reception control unit 234 stores data of the offset measurement value after adjustment in a storage unit (not illustrated).

The reception control unit 234 determines a measurement range that is appropriate when receiving each piece of authentication information so as to adjust reception sensitivity characteristics of the portable side reception unit 210. For example, the portable side reception unit 210 includes the VGA 217, and can set an amplification rate of the portable side reception unit 210 to a desired amplification rate by adjusting an amplification rate of the VGA 217. In other words, the reception control unit 234 controls the VGA 217 to function as an automatic gain controller (AGC), and acquires an amplification rate in which an output signal level of the VGA 217 is optimized by the function of the AGC. Furthermore, the resultant optimized amplification rate takes a quantized discrete value. For example, the amplification rate is set to values of 54 dB (decibel), 36 dB, 18 dB, 0 dB, -18 dB, and the like in the order of a large amplification rate. The reception control unit 234 measures a signal level of an output signal of the VGA 217 while adjusting the amplification rate of the VGA 217 to the above-described values, and optimizes the amplification rate of the VGA 217 so that a measured signal level enters a desired range. Furthermore, in a case where a variable range is broad as described above, the VGA 217 may be configured in a plurality of divided stages, or may be changed in correspondence with a plurality of systems.

As described above, the reception control unit 234 adjusts the amplification rate of the VGA 217 to be an amplification rate appropriate for an optimized measurement range, fixes the amplification rate of the VGA 217 until terminating the following series of processing after terminating the adjustment, and sets a measurement range of the portable side reception unit 210 (step S406).

The signal intensity measurement unit 231 obtain a reception signal intensity value ($RSSI_1$) as an intensity value of an authentication signal by measuring reception signal intensity of a signal corresponding to the first authentication information AUD1. Furthermore, in the subsequent measurement time, $RSSI_1$ is used as a reference value of determination processing in the measurement time (step S408). For example, $RSSI_1$ corresponds to the measurement value W1 in M1 of Fig. 8.

The reception control unit 234 adds "1" to a value of the typical signal detection number-of-times counter (step S410), performs updating to the value after the addition, writes the value after the updating in the typical signal detection number-of-times counter, and proceeds to processing in step S424. The value of the typical signal detection number-of-times counter represents the number of times of measurement in which a measurement value is detected to satisfy a relationship of (TH1<W1).

In determination in step S402, in a case where it is determined that measurement time is the second time or later, the signal intensity measurement unit 231 obtain a reception signal intensity value ($RSSI_N$) as an intensity value of an authentication signal by measuring reception signal intensity of a signal corresponding to the authentication information AUD that corresponds to measurement time (step S412).

The signal determination unit 232 determines whether or not to determine a detected signal as an invalid signal on the basis of the invalid threshold value d2 that is determined from $RSSI_1$ acquired in step S412 (step S414).

In the determination in step S414, in a case where the detected signal is determined as an invalid signal, the reception control unit 234 adds "1" to a value of the invalid signal detection number-of-times counter (step S416), performs updating to the value after the addition, writes the value after the updating in the invalid signal detection number-of-times counter, and proceeds to processing in step S424. The value of the invalid signal detection number-of-times counter represents the number of times of measurement in which a measurement value is detected to satisfy a relationship of (W3<TH2).

On the other hand, in the determination in step S414, in a case where the detected signal is not determined as an invalid signal, the reception control unit 234 determines whether or not a difference between $RSSI_1$ acquired in step S408 of the first measurement time by the signal determination unit 232 and $RSSI_N$ acquired in step S412 of current measurement time by the signal determination unit 232 is equal to or greater than a differential threshold value. For example, the reception control unit 234 determines whether or not to determine the detected signal as a differential signal on the basis of a differential threshold value d1 that is determined from $RSSI_1$ acquired in step S412 (step S418).

In the determination in step S418, in a case where it is determined that the difference between $RSSI_1$ and $RSSI_N$ is equal to or greater than the differential threshold value, the reception control unit 234 adds "1" to the value of the differential signal detection number-of-times counter, performs updating to the value after the addition, writes the value after the updating in the differential signal detection number-of-times counter (step S420), and proceeds to processing in step S424. The value of the differential signal detection number-of-times counter represents the number of times of measurement in which a measurement value is detected to satisfy a relationship of (TH2<W2<TH1).

On the other hand, in the determination in step S418, in a case where it is determined that the difference between $RSSI_1$ and $RSSI_N$ is not equal to or greater than the differential threshold value, the reception control unit 234 adds "1" to the number of times of typical signal detection (step S422), performs updating to the value after the addition, writes the value after the updating in the typical signal detection number-of-times counter, and proceeds to processing in step S424.

After terminating processing in any one of step S410, step S416, step S420, and step S422, the reception control unit 234 adds "1" to the number of times of measurement (step S424), performs updating to the value after the addition, and writes the value after the updating in the measurement number-of-times counter.

The reception control unit 234 determines whether or not measurement in defined number of times is terminated on the basis of the value of the measurement number-of-times counter (step S426).

In the determination in step S426, in a case where it is determined that measurement in the defined number of times is terminated, the reception control unit 234 terminates measurement with respect to the request signal (step S428). According to this, the reception control unit 234 terminates the processing in this flowchart.

On the other hand, in the determination in step S426, in a case where it is determined that measurement in the defined number of times is not terminated, the reception control unit 234 continues the measurement with respect to the request signal (step S430). According to this, the reception control unit 234 terminates the processing in this flowchart.

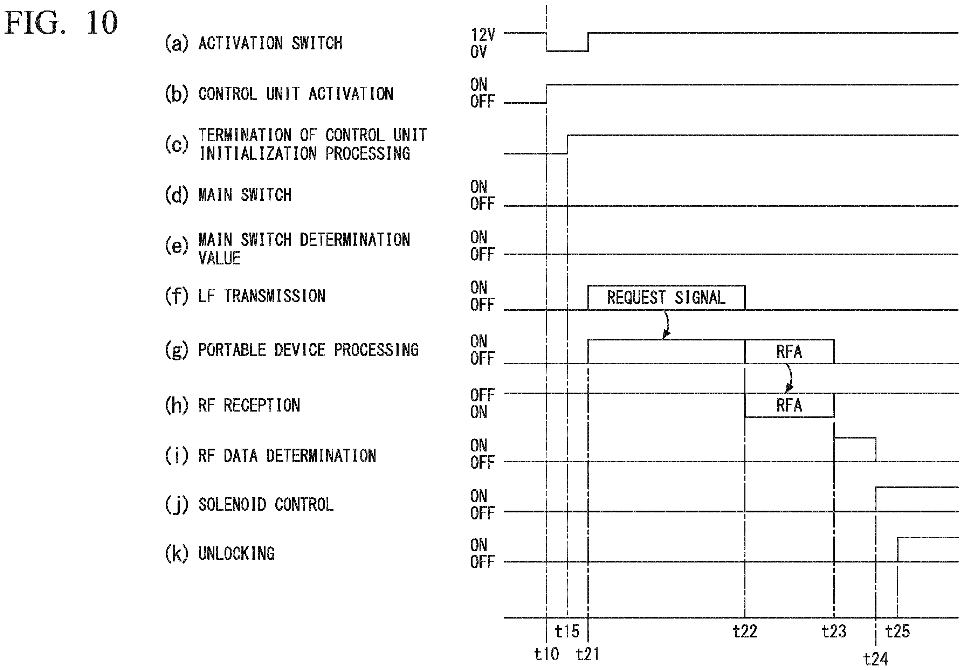

Processing of the portable terminal device authentication system 1 will be described with reference to Fig. 10. The same drawing is a timing chart illustrating an example of a processing flow of the portable terminal device authentication system 1.

Fig. 10 illustrates respective states of (a) activation switch, (b) control unit activation, (c) control unit initialization processing, (d) main switch, (e) main switch determination value, (f) LF transmission, (g) portable device processing, (h) RF reception, (i) RF data determination, (j) solenoid control, and (k) unlocking.

At time t10, a control unit activation instruction is given to the in-vehicle side control unit 30 by operation detection (0 V) of the activation switch 17 ("control unit activation: ON)". In response to the instruction, the in-vehicle side control unit 30 performs initialization processing and terminates the processing at time t15. The initialization processing includes setting processing of an input and output port corresponding to a peripheral part of the in-vehicle side control unit 30, adjustment processing of an initial state of the in-vehicle side reception unit 50, and the like.

The in-vehicle side control unit 30 detects that the main switch 11 is in an OFF-state on the basis of a conduction state acquisition result of the main switch 11 by the main switch state acquisition unit 63, and continues the state in which the determination result of the main switch (main switch determination value) is set to OFF.

The in-vehicle side control unit 30 transmits an LF signal for "smart authentication communication" corresponding to a portable device that is registered in the in-vehicle side control unit 30 in the following order.

At time t21, the in-vehicle device 100 initiates transmission of a request signal, and terminates the transmission at time t22. The portable terminal device 200 transmits, for example, a request signal including a set of signals of the first authentication information AUD1, the second authentication information AUD2, and the third authentication information AUD3 between time t21 and time t22. The portable terminal device 200 receives the request signal. After the reception, the portable terminal device 200 adjusts reception sensitivity characteristics in correspondence with signal intensity of a signal that is extracted from the request signal that is received.

The portable terminal device 200 transmits, for example, a request signal including signals of the first authentication information AUD1, the second authentication information AUD2, and the third authentication information AUD3 between time t21 and time t22.

The portable terminal device 200 receives the request signal and performs authentication processing on the basis of the request signal. In the authentication processing, the portable terminal device 200 performs, for example, authentication processing using differential information of intensity values of the signals of the first authentication information AUD1, the second authentication information AUD2, and the third authentication information AUD3. For example, the portable terminal device 200 stores number-of-times information illustrated in the transmission pattern information table in Fig. 6, and when detecting the number of times corresponding to the pattern, the portable terminal device 200 may authenticate the request from the in-vehicle device 100 as a request for the portable terminal device 200. From the authentication processing result, in a case where the request from the in-vehicle device 100 is authenticated as a request for the portable terminal device 200, the portable terminal device 200 initiates transmission of an answer signal (RFA) from the portable terminal device 200 after time t22. The in-vehicle device 100 receives the answer signal (RFA) transmitted by the in-vehicle side reception unit 50.

At time t23, the in-vehicle device 100 performs authentication (RF data determination) of the portable terminal device 200 on the basis of the answer signal (RFA) that is received. For example, as the authentication of the portable terminal device 200, the in-vehicle device 100 may determine whether or not the received answer signal (RFA) matches a signal that is defined as a normal answer signal. In a case where the authentication of the portable terminal device 200 succeeds (time t24), in the in-vehicle device 100, the in-vehicle side control unit 30 (drive control unit 34) performs a control of driving a solenoid of respective units to release a locked state of the respective units. The locked state of the respective unit is released after time t25.

(Frame Structure of Answer Signal)

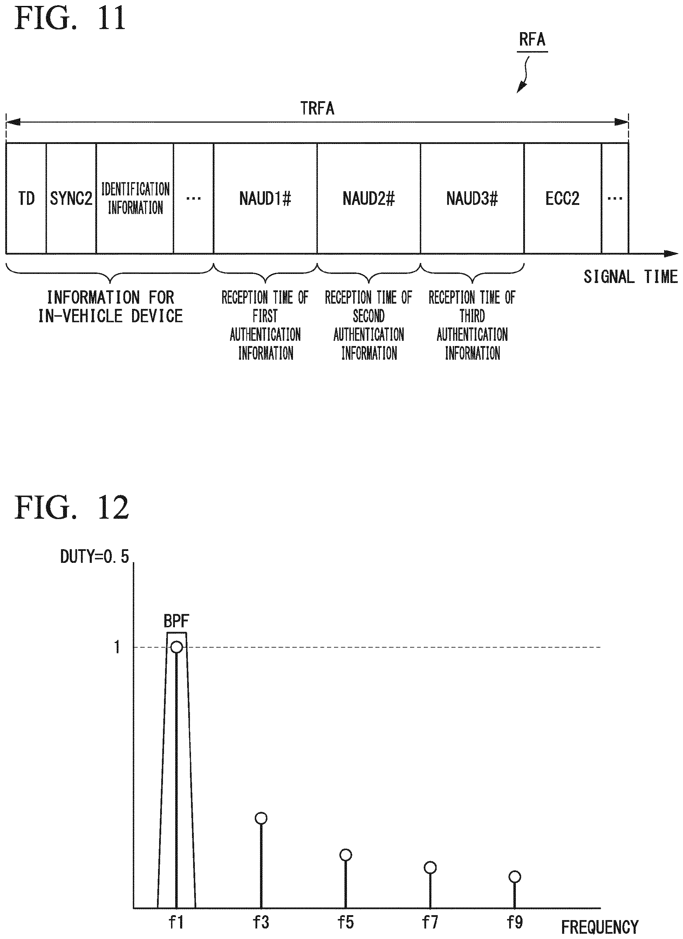

Fig. 11 is a view illustrating a frame structure of an answer signal that is transmitted by RF communication of this embodiment. Hereinafter, the frame structure of the answer signal is referred to as "pattern RFA" in description.

As illustrated in the same drawing, for example, the pattern RFA includes information for the in-vehicle device, information indicating the number of times of reception NAUD1# of the first authentication information AUD1, information indicating the number of times of reception NAUD2# of the second authentication information AUD2, information indicating the number of times of reception NAUD3# of the third authentication information AUD3, error correction information ECC2, and the like. The information for the in-vehicle device includes at least training data TD, a synchronization signal SYNC2, and identification information. Furthermore, the information for the in-vehicle device may include data of the error correction information ECC2 and the like. Furthermore, it is assumed that time TRFA is necessary for transmission of the answer signal having the frame structure of the pattern RFA.

The training data TD is disposed to be first transmitted when transmitting the pattern RFA. A signal pattern, which is necessary for adjustment of the in-vehicle side reception unit 50 when the in-vehicle device 100 receives the pattern RFA, is allocated to the training data TD.

For example, the synchronization signal SYNC2 is disposed to be transmitted subsequently to the training data TD. The synchronization signal SYNC2 includes a signal pattern that is used as an index when extracting various pieces of information after the in-vehicle side reception unit 50 terminates training by the training data TD, and information for identification of a pattern type.

The error correction information ECC2 is information that is used to perform error detection or error correction of each data such as the received information indicating the number of times of reception NAUD1# in the pattern RFA. The error correction information ECC2 can appropriately determine a target range of error detection or error correction, a method of error detection or error correction, and the like for every pattern type.

Furthermore, the communication control unit 32 may allocate information such as the information indicating the number of times of reception NAUD1# of the first authentication information AUD1, information indicating the number of times of reception NAUD2# of the second authentication information AUD2, information indicating the number of times of reception NAUD3# of the third authentication information AUD3 to part of the pattern RFA in a state of being correlated with other pieces of information. For example, the information indicating the number of times of reception NAUD1# of the first authentication information AUD1 may be correlated with reception signal intensity of the first authentication information AUD1. At this time, the communication control unit 32 may set the information indicating the number of times of reception NAUD1# of the first authentication information AUD1, and the information indicating the reception signal intensity of the first authentication information AUD1 as one piece of information by performing linear addition by multiplying the two pieces of information by a predetermined coefficient. As described above, due to the setting of the two pieces of information as one piece of information, it is possible to transmit a plurality of pieces of information as a pattern having a short frame length without individually allocating individual pieces of information to the pattern RFA. In the configuration, description has been given of the first authentication information AUD1, but the same configuration is also true of the second authentication information AUD2 and the third authentication information AUD3.

The determination unit 33 of the in-vehicle device 100 acquires the number of times of reception NAUD1# of the first authentication information AUD1, the number of times of reception NAUD2# of the second authentication information AUD2, the number of times of reception NAUD3# of the third authentication information AUD3 from the answer signal having the frame structure (RFA) as illustrated in the same drawing. For example, the determination unit 33 determines whether or not a signal, which is received by the portable terminal device 200 from the answer signal received by the in-vehicle side reception unit 50, is a normal request signal on the basis of information including the number of times of determination as a "typical" signal (first signal), and the number of times of determination as a "differential signal (second signal)" on the basis of a differential threshold value (first threshold value). The determination unit 33 can determine the signal, which is received by the in-vehicle side reception unit 50, is a normal answer signal on the basis of information including the number of times of determination as the "typical" signal (first signal) and the number of times of determination as the "differential signal (second signal)" through the determination.

(Relationship between DUTY and Signal Intensity)

A relationship between DUTY and signal intensity will be described with reference to Fig. 12 to Fig. 14. Fig. 12 is a view illustrating a relationship between a signal including a pulse string of which DUTY is set to 50%, and signal intensity.

The communication control unit 32 supplies a signal including a rectangular wave (pulse signal) having an amplitude (peak value) A and a pulse width $\tau$. When the pulse signal of the signal is set to repeat at a period of T, frequency components of the signal include a component of a frequency $f_1$ (=1/T) and a harmonic component in which the frequency $f_1$ is set as a basic frequency.

In a case where the communication control unit 32 supplies a signal of which DUTY is set to 50%, the signal includes a component of the frequency $f_1$ (=1/T), and an odd-order harmonic component in which the frequency $f_1$ is set as a basic frequency. Frequencies of odd-order (for example, third, fifth, seventh, and ninth) harmonic waves are noted as $f_3$, $f_5$, $f_7$, and $f_9$. In a case where signal intensity of a signal component of the frequency $f_1$ is normalized with the amplitude A of the pulse signal, and the signal intensity becomes 1, signal intensity of a frequency of the $n^{th}$ harmonic wave becomes (1/n). That is, the signal intensity of the frequencies $f_3$, $f_5$, $f_7$, $f_9$, ... becomes (1/3), (1/5), (1/7), (1/9), .... Furthermore, among the signal components of the respective frequencies, components other than the frequency $f_1$ are attenuated by the resonance unit 42. As described above, in a case where the resonance unit 42 is configured as an LC resonance circuit, a frequency band BPF of a signal transmission region of the resonance unit 42 is determined by a Q value of the resonance circuit. The resonance unit 42 can extract the component of the frequency $f_1$ by attenuating signals in bands other than the transmission region in a relatively larger attenuation rate in comparison to a signal of the transmission region.

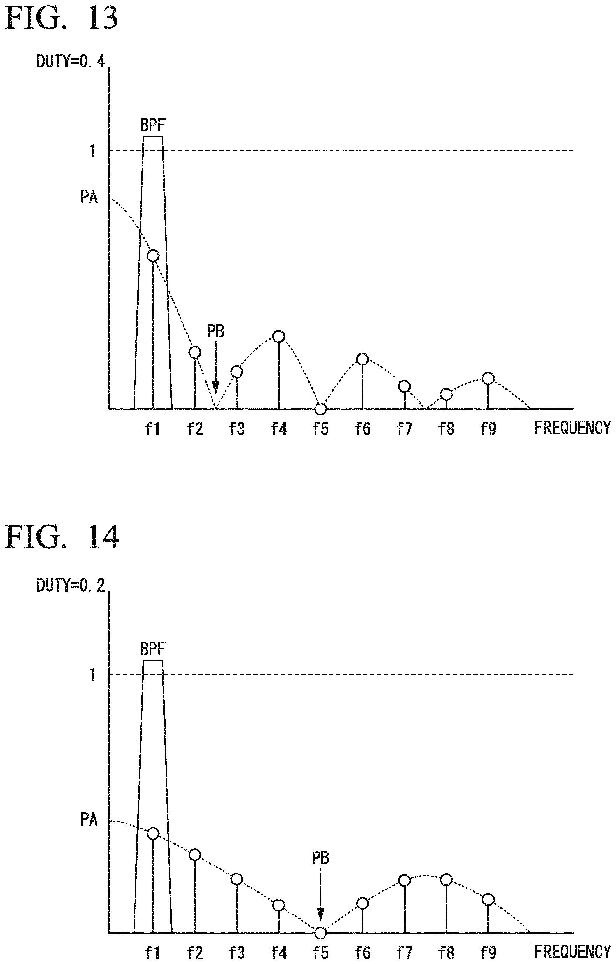

Fig. 13 and Fig. 14 are views illustrating a relationship between a signal including a pulse string of which DUTY is set to a value different from 50%, and signal intensity.

Frequencies of the odd-order (third, fifth, seventh, ninth) harmonic waves are noted as $f_3$, $f_5$, $f_7$, and $f_9$ as described above. Frequencies of even-order (second, fourth, sixth, and eighth) harmonic waves are noted as $f_2$, $f_4$, $f_6$, and $f_8$. In a case where the communication control unit 32 supplies a signal of which DUTY is set to a value different from 50%, the signal includes a component of the frequency $f_1$ (=1/T), an odd-order harmonic component in which the frequency $f_1$ is set as a basic frequency, and an even-order harmonic component. In a case of a signal of which DUTY is set to a value different from 50%, signal intensity of each frequency takes a different value in accordance with the magnitude of DUTY. Here, a graph of Fig. 13 illustrates a case where DUTY is set to 40%, and a graph of Fig. 14 illustrates a case where DUTY is set to 20%. As illustrated in Fig. 13 and Fig. 14, signal intensity of each frequency of a signal of which DUTY is set to a value different from 50% shows a tendency different from a case where the signal of which DUTY is set to 50% as illustrated in Fig. 12. In Fig. 13 and Fig. 14, a line L represents a value of signal intensity, which is calculated on the basis of DUTY, of each frequency. For example, signal intensity at a point (point PA), at which a frequency is in the vicinity of 0, becomes a value two times a value obtained by multiplying DUTY (pulse width $\tau$/period T) by the amplitude A of the pulse signal, and signal intensity of a frequency (point PB) that is natural number times a frequency of a reciprocal of the pulse width $\tau$ ($1/\tau$) becomes 0. For example, the value of DUTY is set to satisfy a relationship of 0% < DUTY < 50% (= 0.5). The line L becomes a line that interpolates the point PA and the PB. In the following description, signal intensity of the frequency $f_1$ of which DUTY is set to 50% is treated as 1 for comparison with the case in which DUTY is set to 50%.

Furthermore, among the signal components of the respective frequencies illustrated in Fig. 12 to Fig. 14, components other than the frequency $f_1$ are attenuated by resonance characteristics of the resonance unit 42. For example, the resonance unit 42 is configured as an LC resonance circuit, and a frequency band of a signal transmission region of the resonance unit 42 is determined by a Q value of the resonance circuit. The resonance unit 42 can extract a frequency component of the frequency $f_1$ except for harmonic components by further attenuating signals of bands other than the transmission region in comparison to the signal of the transmission region.

(Relationship between DUTY and Authentication Information)

A relationship between DUTY and authentication information will be described. Predetermined DUTY is correlated with the authentication information illustrated in Fig. 6, and the communication control unit 32 supplies a signal with DUTY corresponding to the authentication information on the basis of the kind of the authentication information which is determined. The communication control unit 32 selects desired authentication information among a plurality of pieces of authentication information, and transmits a signal with DUTY that is selected.

The plurality of pieces of authentication information include the first authentication information AUD1, the second authentication information AUD2, and the third authentication information AUD3. For example, the communication control unit 32 selects a pattern when transmitting the plurality of pieces authentication information with reference to the transmission pattern information table (Fig. 6) that stores the transmission pattern. The communication control unit 32 determines the kind of the authentication information and time for which the authentication information is continuously transmitted on the basis of the pattern that is selected. For example, the communication control unit 32 determines correlation of DUTY with respect to the kind of the authentication information as follows. DUTY when transmitting the first authentication information AUD1 is set to DUTY1, DUTY when transmitting the second authentication information AUD2 is set to DUTY2, and DUTY when transmitting the third authentication information AUD3 is set to DUTY3.

For example, DUTY1, DUTY2, and DUTY3 are examples of "first duty ratio", "second duty ratio", and "third duty ratio".

With respect to DUTY1, DUTY2, and DUTY3, a value of each DUTY is determined in advance so that a desired value is obtained as signal intensity of an authentication signal. For example, DUTY 1 is set to 50%, DUTY2 is set to a value different from 50% by a predetermined amount $\alpha1$, and DUTY 3 is set to a value different from 50% by a predetermined amount $\alpha2$. Here, when a relationship of $|\alpha1| < |\alpha2| < 50$ is set, a relationship of $0 < (50 - |\alpha2|) < (50 - |\alpha1|) < 50$ is satisfied. When $\alpha1$ and $\alpha2$ are determined as described above, a deviation amount from 50% of DUTY increases in the order of DUTY 1, DUTY2, and DUTY3. In a case where DUTY is determined as described above and the communication control unit 32 supplies a pulse signal string, in which a frequency of a signal DMOD is set to $f_0$, to the resonance unit 42, signal intensity of an electrical wave, which is transmitted from the transmission antenna 43, is the highest in DUTY1, and the signal intensity decreases in the order of DUTY2 and DUTY3.

In a rectangular wave of which an amplitude is common with the frequency $f_0$ of the pulse signal string, in a case where DUTY is different, in a signal of which DUTY is closer to 50%, a frequency component of the frequency $f_0$ increases. On the other hand, as a difference from 50% in DUTY further increases, signal intensity of the frequency component of the frequency $f_0$ becomes relatively smaller in comparison to a case where DUTY is 50%, and signal intensity of a harmonic component becomes relatively larger.

For example, the predetermined amount $\alpha1$ is set to 10%, and the predetermined amount $\alpha2$ is set to 30%. The former corresponds to Fig. 13 in which DUTY2 is set to a value (DUTY=0.4) different from 50% by the predetermined amount $\alpha1$. The latter corresponds to Fig. 14 in which DUTY3 is set to a value (DUTY=0.2) different from 50% by the predetermined amount $\alpha2$.

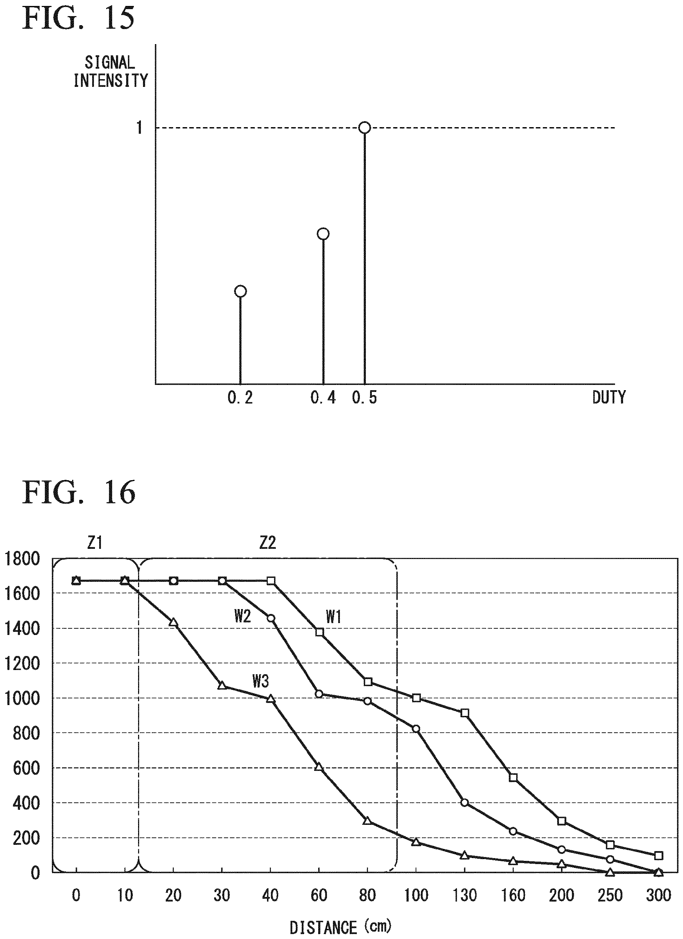

Fig. 15 is a view illustrating a difference in signal intensity of the frequency $f_1$ as illustrated in Fig. 12 to Fig. 14. As illustrated in Fig. 15, in a case where DUTY take values different from each other, signal intensity of

the frequency $f_1$ becomes values different from each other. In a case where DUTY is set to 50% as in Fig. 12, signal intensity of the frequency $f_1$ becomes 1. In a case where DUTY is set to 40% as in Fig. 13, the signal intensity of the frequency $f_1$ becomes approximately 0.6. In a case where DUTY is set to 20% as in Fig. 14, the signal intensity of the frequency $f_1$ becomes approximately 0.4. As described above, in a case of a signal of which DUTY is set to 50%, the signal includes much energy of the frequency $f_1$. As DUTY is closer to 0%, the signal includes less energy of the frequency $f_1$.

For example, the communication control unit 32 supplies a signal, which is selected from a plurality of signals which are different in DUTY as described above, to the in-vehicle side transmission unit 40 in correspondence with the request signal. The in-vehicle side transmission unit 40 transmits an authentication signal having signal intensity corresponding to DUTY of the signal that is supplied from the communication control unit 32.

A plurality of signals, which are supplied from the communication control unit 32 to the in-vehicle side transmission unit 40, include at least a signal with DUTY1 and a signal with DUTY2. The in-vehicle side transmission unit 40 may generate two kinds of authentication signals from two kinds of signals which are different in DUTY, and may transmit the two kinds of authentication signals. The authentication signals, which are generated by the in-vehicle side transmission unit 40, have two stages of signal intensity. The portable terminal device 200 may perform authentication processing based on the authentication signals having at least two stages of signal intensity.

In addition, the plurality of signals, which are supplied from the communication control unit 32 to the in-vehicle side transmission unit 40, may further include a signal with DUTY3 different from DUTY1 and DUTY2. The portable terminal device authentication system 1 can perform authentication processing using signals different in signal intensity by appropriately selecting DUTY1, DUTY2, and DUTY3.

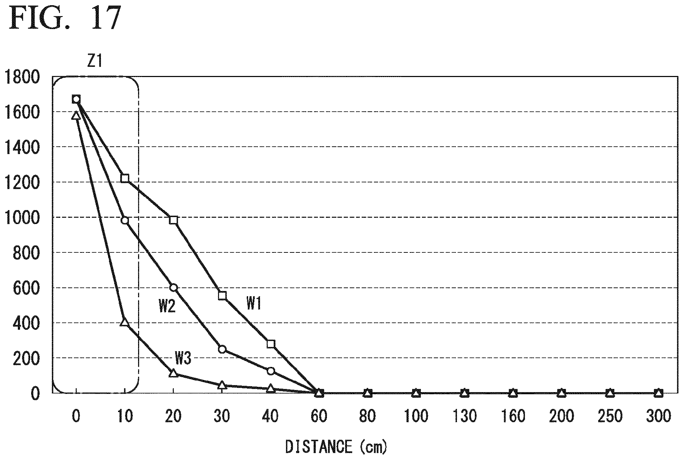

Fig. 16 and Fig. 17 are views illustrating an effect obtained by the portable terminal device authentication system 1. Graphs illustrated in Fig. 16 and Fig. 17 illustrate measurement results of signal intensity of a set of signals detected in the portable terminal device 200 by changing a distance between the in-vehicle device 100 and the portable terminal device 200. Fig. 16 illustrates an example in which reception sensitivity characteristics of the portable terminal device 200 are determined so that unlocking processing of the in-vehicle device 100 can be performed from the portable terminal device 200 that is located relatively far away. As illustrated in the drawing, graphs indicated by W1 to W3 respectively illustrate reception intensity of the first authentication information AUD1, the second authentication information AUD2, and the third authentication information AUD3. It can be seen that W1 to W3 are separated from each other in a range of approximately 40 (cm) and 250 (cm), and thus it is possible to detect a difference in signal intensity. When reception sensitivity characteristics of the portable terminal device 200 are determined to correspond to the signal intensity illustrated in the drawing, the above-described authentication method can be applied even when the reception sensitivity characteristics are not adjusted. However, in a range of approximately 40 (cm) or less, a reception level is saturated, and thus it is difficult to perform reception in a state in which W1 to W3 are separated from each other.

Fig. 17 illustrates measurement results in a case of adjusting reception sensitivity characteristics of the portable terminal device 200 with respect to measurement conditions in Fig. 16. Under measurement conditions of the measurement results illustrated in Fig. 17, reception sensitivity of the portable terminal device 200 is further reduced in comparison to the measurement conditions illustrated in Fig. 16. In a range of approximately 40 (cm) or less, in which W1 to W3 are not separated from each other in the results illustrated in Fig. 16, it can be seen that it is possible to perform reception in a state in which W1 to W3 are separated from each other.

As described above, according to the portable terminal device authentication system 1, the reception sensitivity characteristics of the portable terminal device 200 are adjusted on the basis of intensity of a signal that is actually received, and thus it is possible to receive the first authentication information AUD1, the second authentication information AUD2, and the third authentication information AUD3, which are used as authentication signals, as signals which are different in signal intensity.

According to the above-described embodiment, the in-vehicle side control unit 30 of the portable terminal device authentication system 1 (in-vehicle device 100) according to this embodiment generates a plurality of instruction signals which are different in a duty ratio, and supplies the instruction signals which are generated to the in-vehicle side transmission unit in correspondence with the request signal. The in-vehicle side transmission unit 40 generates an authentication signal with signal intensity corresponding to DUTY of the plurality of instruction signals which are supplied, and transmits the request signal including the authentication signal to the portable terminal device 200. The in-vehicle side transmission unit 40 generates an authentication signal with signal intensity corresponding to DUTY of the plurality of instruction signals which are supplied, and transmits the request signal including the authentication signal that is generated to the portable terminal device 200.

In addition, the portable side control unit 230 may transmit processing results based on a first intensity value of a first authentication signal and a second intensity value of a second authentication signal, and the in-vehicle side control unit 30 may determine validity of the request signal.

In addition, the portable side control unit 230 may determine validity of the request signal in the basis of the first intensity value of the first authentication signal and the second intensity value of the second authentication signal.

In addition, the in-vehicle side control unit 30 may continuously output an instruction signal with DUTY1 for a first time, and may continuously output an instruction signal with DUTY2 for a second time, and the portable terminal device 200 may measure an authentication signal, the in-vehicle side control unit 30 may compare the first time and the second time, and a first detection time of the first intensity value and a second detection time of the second intensity value with each other, and may determine validity of the in-vehicle device 100 or the portable terminal device 200 on the basis of the comparison result.

In addition, the in-vehicle side control unit 30 may determine validity of the in-vehicle device 100 or the portable terminal device 200 on the basis of information including the number of times of determination as the first authentication signal and the number of times of determination as the second authentication signal by the portable side control unit 230 on the basis of the first threshold value.

In addition, the in-vehicle side control unit 30 may cause the in-vehicle side transmission unit 40 to transmit the authentication signal at a transmission time which is irregularly determined in a predetermined pattern.

According to the portable terminal device authentication system 1 as described above, it is possible to improve authentication security by adjusting intensity of the authentication signal that is transmitted. Furthermore, the portable terminal device authentication system 1 determines validity of the in-vehicle device 100 or the portable terminal device 200 at least from a determination result indicating whether or not a signal received by the portable terminal device 200 is a normal request signal.

Hereinafter, description will be given of modification examples of this embodiment.

For example, the portable terminal device authentication system 1 according to the above-described embodiment may be applied to an automobile such as a passenger vehicle including vehicle doors. In this case, when the portable terminal device 200 is authenticated by the in-vehicle device 100, locking of the vehicle doors may be released.

In addition, in the portable terminal device authentication system 1 according to the above-described embodiment, determination as to whether or not a signal received by the portable terminal device 200 is a normal request signal may be performed on the portable terminal device 200 side, that is, by the portable side control unit 230. For example, when the portable side control unit 230 performs the determination processing described above as the processing of the in-vehicle side control unit 30, it is possible to obtain a determination result on the portable terminal device 200 side. Furthermore, in this case, the portable side control unit 230 may perform a control so that the determination result is transmitted to the in-vehicle device 100 while being included in the answer signal, or the determination result is displayed on a display unit that is provided in the portable terminal device 200, or the determination result is output to an external device other than the in-vehicle device 100 in a notification.

In addition, in the portable terminal device authentication system 1 according to the above-described embodiment, description has been given of an example in which signal intensity (output) in transmission of the authentication information included in the request signal is changed by using a phenomenon in which the amount of attenuation by the resonance unit 42 is different in accordance with DUTY of a signal that is supplied to the resonance unit 42, but there is no limitation thereto. For example, as in the resonance unit 42, signal intensity (or a gain) for every authentication information may be made to be different by using a band-pass filter circuit and the like through which the frequency $f_1$ is transmitted. In addition, the filter circuit may be realized by an analog circuit, a digital circuit, or a combination of the circuits. For example, the in-vehicle side control unit 30 may generate a sinusoidal wave or a periodic signal in which a harmonic component is suppressed, and may supply the signal to the drive unit 41.

Hereinbefore, an aspect for carrying out the invention has been described with reference to an embodiment, but the invention is not limited to the embodiment, and various modifications and substitutions can be made in a range not departing from the scope of the invention.

For example, in the above-described embodiment, description has been given of an example in which the in-vehicle side control unit 30 transmit the processing result based on the first intensity value of the first authentication signal and the second intensity value of the second authentication signal, and the in-vehicle side control unit 30 determines validity of the request signal. However, the portable side control unit 230 may determine validity of the request signal on the basis of the first intensity value of the first authentication signal and the second intensity value of the second authentication signal. According to this, even in the portable terminal device 200 that does not transmits the answer signal, it is possible to execute the authentication processing of the in-vehicle device 100.

In a portable terminal device authentication system, an in-vehicle side control unit generates a plurality of instruction signals which are different in a duty ratio, and supplies the instruction signals which are generated to an in-vehicle side transmission unit in correspondence with the request signal, the in-vehicle side transmission unit generates an authentication signal with signal intensity corresponding to the duty ratio of the plurality of instruction signals which are supplied, and transmits the request signal including the authentication signal to the portable terminal device, and an in-vehicle side control unit or the portable side control unit determines validity of the in-vehicle device or the portable terminal device on the basis of a processing result of the portable side control unit.

[Reference Signs List]

| | |
|---|---|
| 1 | Portable terminal device authentication system |
| 6 | Kick pedal |
| 7 | Kick operation unit |
| 8 | Conversion unit |
| 16 | Handle lock unit |
| 17 | Activation switch |
| 18 | Actuator unit |
| 100 | In-vehicle device |
| 20 | Power supply unit |
| 30 | In-vehicle side control unit |
| 31 | Starting control unit |
| 32 | Communication control unit |
| 33 | Determination unit |
| 34 | Drive control unit |
| 35 | Storage unit |
| 40 | In-vehicle side transmission unit |
| 50 | In-vehicle side reception unit |
| 61 | Drive circuit unit |
| 62 | Input circuit unit |
| 63 | Main switch state acquisition unit |
| 64 | Main relay drive unit |
| 65 | Starter drive unit |
| 200 | Portable terminal device |
| 210 | Portable side reception unit |
| 220 | Portable side transmission unit |
| 230 | Portable side control unit |
| 231 | Signal intensity measurement unit |
| 232 | Signal determination unit |
| 233 | Signal generation unit |
| 234 | Reception control unit |
| V | Scooter |
| E | Engine |
| P | Power unit |
| B | Battery |
| H | Handle |

**Claims**

1. A portable terminal device authentication system, comprising:

an in-vehicle device (100) including,
an in-vehicle side transmission unit (40) configured to transmit a request signal,
an in-vehicle side reception unit (50) configured to receive an answer signal, and
an in-vehicle side control unit (30) configured to cause the in-vehicle side transmission unit (40) to transmit the request signal and determine validity of the answer signal that is received by the in-vehicle side reception unit (50); and
a portable terminal device (200) including,
a portable side reception unit (210) configured to receive the request signal,
a portable side transmission unit (220) configured to transmit the answer signal, and
a portable side control unit (230) configured to control the portable side transmission unit (220) to transmit the answer signal in response to reception of the request signal by the portable side reception unit (210),
**characterized in that**
the in-vehicle side control unit (30) generates a plurality of instruction signals which are different in a duty ratio, and supplies the instruction signals which are generated to the in-vehicle side transmission unit (40) in correspondence with the request signal,
the in-vehicle side transmission unit (40) generates an authentication signal with signal intensity corresponding to the duty ratio of the plurality of instruction signals which are supplied, and transmits the request signal including the authentication signal to the portable terminal device (200),
the portable side control unit (230) performs processing based on an intensity value of the authentication signal which is included in the request signal that is received by the portable side reception unit (210), and
the in-vehicle side control unit (30) or the portable side control unit (230) determines validity of the in-vehicle device (100) or the portable terminal device (200) on the basis of a processing result of the portable side control unit (230).

2. The portable terminal device authentication system according to Claim 1,

wherein the portable side control unit (230) performs the processing based on a first intensity value of a first authentication signal and a second intensity value of a second authentication signal, the first intensity value and the second intensity value being included in the authentication signal, and causes the portable side transmission unit (220) to transmit the processing result to be included in the answer signal, and
the in-vehicle side control unit (30) determines validity of the request signal on the basis of the processing result that is included in the answer signal.

3. The portable terminal device authentication system according to Claim 1,
wherein the portable side control unit (230) performs the processing based on a first intensity value of a first authentication signal and a second intensity value of a second authentication signal, the first intensity value and the second intensity value being included in the authentication signal, and determines validity of the request signal on the basis of the processing result.

4. The portable terminal device authentication system according to Claim 2,

wherein the in-vehicle side control unit (30) continuously outputs the instruction signal with a first duty ratio for a first time, and continuously outputs the instruction signal with a second duty ratio for a second time,
the portable side control unit (230) measures a first detection time of the first intensity value of the first authentication signal, and a second detection time of the second intensity value of the second authentication signal, and
the in-vehicle side control unit (30) compares the first time and the second time, and the first detection time and the second detection time with each other, and determines validity of the in-vehicle device (100) or the portable terminal device (200) on the basis of the comparison result.

5. The portable terminal device authentication system according to Claim 2,
wherein the in-vehicle side control unit (30) determines validity of the in-vehicle device (100) or the portable terminal device (200) on the basis of information including a number of times of determination as the first authentication signal and a number of times of determination as the second authentication signal by the portable side control unit (230) on the basis of a first threshold value.

6. The portable terminal device authentication system according to any one of claims 2, 4, and 5,
wherein the in-vehicle side control unit (30) causes the in-vehicle side transmission unit (40) to transmit the authentication signal at a transmission time which is irregularly determined in a predetermined pattern.

7. An in-vehicle device, comprising:

an in-vehicle side transmission unit (40) configured to transmit a request signal;
an in-vehicle side reception unit (50) configured to receive an answer signal; and
an in-vehicle side control unit (30) configured to causes the in-vehicle side transmission unit (40) to transmit the request signal and determine validity of the answer signal that is received by the in-vehicle side reception unit (50),

wherein the in-vehicle side control unit (30) generates a plurality of instruction signals which are different in a duty ratio, and supplies the instruction signals which are generated to the in-vehicle side transmission unit in correspondence with the request signal, and
the in-vehicle side transmission unit (40) generates an authentication signal with signal intensity corresponding to the duty ratio of the plurality of instruction signals which are supplied, and transmits the request signal including the authentication signal to a portable terminal device (200).

**Patentansprüche**

1. Tragbares-Endgerät-Authentisierungssystem, welches aufweist:
eine fahrzeuginterne Vorrichtung (100), welche enthält:

eine fahrzeuginterne Sendeeinheit (40), die konfiguriert ist, um ein Anforderungssignal zu senden,
eine fahrzeuginterne Empfangseinheit (50), die konfiguriert ist, um ein Antwortsignal zu empfangen, und
eine fahrzeuginterne Steuereinheit (30), die konfiguriert ist, um zu veranlassen, dass die fahrzeuginterne Sendeeinheit (40) das Anforderungssignal sendet, und die Gültigkeit des Antwortsignals zu bestimmen, das von der fahrzeuginternen Empfangseinheit (50) empfangen wird; und
ein tragbares Endgerät (200), welches enthält:

eine tragbare Empfangseinheit (210), die konfiguriert ist, um das Anforderungssignal zu empfangen;
eine tragbare Sendeeinheit (220), die konfiguriert ist, um das Antwortsignal zu senden; und
eine tragbare Steuereinheit (230), die konfiguriert ist, um die tragbare Sendeeinheit (220) anzusteuern, um das Antwortsignal in Antwort auf den Empfang des Anforderungssignals von der tragbaren Empfangseinheit (210) zu senden,
**dadurch gekennzeichnet, dass**
die fahrzeuginterne Steuereinheit (30) eine Mehrzahl von Anweisungssignalen mit unterschiedlichem Tastverhältnis erzeugt, und die erzeugten Anweisungssignale der fahrzeuginternen Sendeeinheit (40) entsprechend dem Anforderungssignal zuführt,
wobei die fahrzeuginterne Sendeeinheit (40) ein Authentisierungssignal mit einer Signalintensität erzeugt, die dem Tastverhältnis der Mehrzahl von zugeführten Anweisungssignalen entspricht, und das das Authentisierungssignal enthaltende Anweisungssignal zu dem tragbaren Endgerät (200) sendet,
wobei die tragbare Steuereinheit (230) einen Prozess basierend auf einem Intensitätswert des Authentisierungssignals, das in dem Anweisungssignal enthalten ist, das von der tragbaren Empfangseinheit (210) empfangen wird, durchführt, und
die fahrzeuginterne Steuereinheit (30) oder die tragbare Steuereinheit (230) die Gültigkeit der fahrzeuginternen Vorrichtung (100) oder des tragbaren Endgeräts (200) auf der Basis eines Prozessergebnisses der tragbaren Steuereinheit (230) bestimmt.

2. Das Tragbares-Endgerät-Authentisierungssystem nach Anspruch 1, wobei die tragbare Steuereinheit (230) den Prozess basierend auf einem ersten Intensitätswert eines ersten Authentisierungssignals und einem zweiten Intensitätswert eines zweiten Authentisierungssignals durchführt, wobei der erste Intensitätswert und der zweite Intensitätswert in dem Authentisierungssignal enthalten sind, und veranlasst, dass die tragbare Sendeeinheit (220) das Prozessergebnis so sendet, dass es in dem Antwortsignal enthalten ist, und
die fahrzeuginterne Steuereinheit (30) die Gültigkeit des Anforderungssignals auf der Basis des Prozessergebnisses, das in dem Antwortsignal enthalten ist, bestimmt.

3. Das Tragbares-Endgerät-Authentisierungssystem nach Anspruch 1, wobei die tragbare Steuereinheit (230) den Prozess basierend auf einem ersten Intensitätswert eines ersten Authentisierungssignals und einem Intensitätswert eines zweiten Authentisierungssignals durchführt, wobei der erste Intensitätswert und der zweite Intensitätswert in dem Authentisierungssignal enthalten sind, und die Gültigkeit des Anforderungssignals auf der Basis des Prozessergebnisses bestimmt.

4. Das Tragbares-Endgerät-Authentisierungssystem nach Anspruch 2, wobei die fahrzeuginterne Steuereinheit (30) das Anweisungssignal mit einem ersten Tastverhältnis für eine erste Zeit kontinuierlich ausgibt, und das Anweisungssignal mit einem zweiten Tastverhältnis für eine zweite Zeit kontinuierlich ausgibt,
die tragbare Steuereinheit (230) eine erste Detektionszeit des ersten Intensitätswerts des ersten Authentisierungssignals sowie eine zweite Detektionszeit des zweiten Intensitätswerts des zweiten Authentisierungssignals misst, und
die fahrzeuginterne Steuereinheit (30) die erste Zeit mit der zweiten Zeit vergleicht und die erste Detektionszeit mit der zweiten Detektionszeit vergleicht, und die Gültigkeit der fahrzeuginternen Vorrichtung (100) oder des tragbaren Endgeräts (200) auf der Basis des Vergleichsergebnisses bestimmt.

5. Das Tragbares-Endgerät-Authentisierungssystem nach Anspruch 2, wobei die fahrzeuginterne Steuereinheit (30) die Gültigkeit der fahrzeuginternen Vorrichtung (100) oder des tragbaren Endgeräts (200) auf der Basis von Information bestimmt, welche eine Häufigkeit der Bestimmung als das erste Authentisierungssignal und eine Häufigkeit der Bestimmung als das zweite Authentisierungssignal durch die tragbare Steuereinheit (230) auf der Basis eines ersten Schwellenwerts enthält.

6. Das Tragbares-Endgerät-Authentisierungssystem nach einem der Ansprüche 2, 4 und 5,
wobei die fahrzeuginterne Steuereinheit (30) veranlasst, dass die fahrzeuginterne Sendeeinheit (40) das Authentisierungssignal zu einer Sendezeit sendet, die in einem vorbestimmten Muster irregulär bestimmt ist.

7. Fahrzeuginterne Vorrichtung, welche aufweist:

eine fahrzeuginterne Sendeeinheit (40), die konfiguriert ist, um ein Anforderungssignal zu senden,
eine fahrzeuginterne Empfangseinheit (50), die konfiguriert ist, um ein Antwortsignal zu empfangen, und
eine fahrzeuginterne Steuereinheit (30), die konfiguriert ist, um zu veranlassen, dass die fahrzeuginterne Sendeeinheit (40) das Anforderungssignal sendet, und die Gültigkeit des Antwortsignals zu bestimmen, das von der fahrzeuginternen Empfangseinheit (50) empfangen wird,
wobei die fahrzeuginterne Steuereinheit (30) eine Mehrzahl von Anweisungssignalen mit unterschiedlichem Tastverhältnis erzeugt, und die erzeugten Anweisungssignale der fahrzeuginternen Sendeeinheit entsprechend dem Anforderungssignal zuführt, und
die fahrzeuginterne Sendeeinheit (40) ein Authentisierungssignal mit einer Signalintensität erzeugt, die dem Tastverhältnis der Mehrzahl von zugeführten Anweisungssignalen entspricht, und das das Authentisierungssignal enthaltende Anweisungssignal zu dem tragbaren Endgerät (200) sendet.

## Revendications

1. Système d'authentification de dispositif terminal portable, comprenant :

   un dispositif embarqué (100) incluant,
   une unité de transmission de côté embarquée (40) configurée pour transmettre un signal de demande,
   une unité de réception de côté embarquée (50) configurée pour recevoir un signal de réponse, et
   une unité de commande de côté embarquée (30) configurée pour amener l'unité de transmission de côté embarquée (40) à transmettre le signal de demande et déterminer une validité du signal de réponse qui est reçu par l'unité de réception de côté embarquée (50) ; et
   un dispositif terminal portable (200) incluant,
   une unité de réception de côté portable (210) configurée pour recevoir le signal de demande,
   une unité de transmission de côté portable (220) configurée pour transmettre le signal de réponse, et
   une unité de commande de côté portable (230) configurée pour commander à l'unité de transmission de côté portable (220) de transmettre le signal de réponse en réponse à une réception du signal de demande par l'unité de réception de côté portable (210),
   **caractérisé en ce que**
   l'unité de commande de côté embarquée (30) génère une pluralité de signaux d'instructions qui ont un rapport cyclique différent, et fournit les signaux d'instructions qui sont générés à l'unité de transmission de côté embarquée (40) en correspondance avec le signal de demande,
   l'unité de transmission de côté embarquée (40) génère un signal d'authentification avec une intensité de signal correspondant au rapport cyclique de la pluralité de signaux d'instructions qui sont fournis, et transmet le signal de demande incluant le signal d'authentification au dispositif terminal portable (200),
   l'unité de commande de côté portable (230) effectue un traitement sur la base d'une valeur d'intensité du signal d'authentification qui est inclus dans le signal de demande qui est reçu par l'unité de réception de côté portable (210), et
   l'unité de commande de côté embarquée (30) ou l'unité de commande de côté portable (230) détermine une validité du dispositif embarqué (100) ou du dispositif terminal portable (200) sur la base d'un résultat de traitement de l'unité de commande de côté portable (230).

2. Système d'authentification de dispositif terminal portable selon la revendication 1, dans lequel l'unité de commande de côté portable (230) effectue le traitement sur la base d'une première valeur d'intensité d'un premier signal d'authentification et d'une seconde valeur d'intensité d'un second signal d'authentification, la première valeur d'intensité et la seconde valeur d'intensité étant incluses dans le signal d'authentification, et amène l'unité de transmission de côté portable (220) à transmettre le résultat de traitement à inclure dans le signal de réponse, et l'unité de commande de côté embarquée (30) détermine une validité du signal de demande sur la base du résultat de traitement qui est inclus dans le signal de réponse.

3. Système d'authentification de dispositif terminal portable selon la revendication 1, dans lequel l'unité de commande de côté portable (230) effectue le traitement sur la base d'une première valeur d'intensité d'un premier signal d'authentification et d'une seconde valeur d'intensité d'un second signal d'authentification, la première valeur d'intensité et la seconde valeur d'intensité étant incluses dans le signal d'authentification, et détermine une validité du signal de demande sur la base du résultat de traitement.

4. Système d'authentification de dispositif terminal portable selon la revendication 2, dans lequel l'unité de commande de côté embarquée (30) délivre continuellement le signal d'instructions avec un premier rapport cyclique pendant un premier temps, et délivre continuellement le signal d'instructions avec un second rapport cyclique pendant un second temps, l'unité de commande de côté portable (230) mesure un premier temps de détection de la première valeur d'intensité du premier signal d'authentification, et un second temps de détection de la seconde valeur d'intensité du second signal d'authentification, et l'unité de commande de côté embarquée (30) compare le premier temps et le second temps, et le premier temps de détection et le second temps de détection l'un à l'autre, et détermine une validité du dispositif embarqué (100) ou du dispositif terminal portable (200) sur la base du résultat de comparaison.

5. Système d'authentification de dispositif terminal portable selon la revendication 2, dans lequel l'unité de commande de côté embarquée (30) détermine une validité du dispositif embarqué (100) ou du dispositif terminal portable (200) sur la base d'informations incluant un nombre de fois de détermination en tant que le premier signal d'authentification et un nombre de fois de détermination en tant que le second signal d'authentification par l'unité de commande de côté portable (230) sur la base d'une première valeur de seuil.

6. Système d'authentification de dispositif terminal portable selon l'une quelconque des revendications 2, 4 et 5,

dans lequel l'unité de commande de côté embarquée (30) amène l'unité de transmission de côté embarquée (40) à transmettre le signal d'authentification à un temps de transmission qui est déterminé de manière irrégulière dans un motif prédéterminé.

7. Dispositif embarqué, comprenant :

une unité de transmission de côté embarquée (40) configurée pour transmettre un signal de demande,

une unité de réception de côté embarquée (50) configurée pour recevoir un signal de réponse ; et

une unité de commande de côté embarquée (30) configurée pour amener l'unité de transmission de côté embarquée (40) à transmettre le signal de demande et déterminer une validité du signal de réponse qui est reçu par l'unité de réception de côté embarquée (50) ; et

dans lequel l'unité de commande de côté embarquée (30) génère une pluralité de signaux d'instructions qui ont un rapport cyclique différent, et fournit les signaux d'instructions qui sont générés à l'unité de transmission de côté embarquée en correspondance avec le signal de demande, et

le signal de transmission de côté embarqué (40) génère un signal d'authentification avec une intensité de signal correspondant au rapport cyclique de la pluralité de signaux d'instructions qui sont fournis, et transmet le signal de demande incluant le signal d'authentification à un dispositif terminal portable (200).

FIG. 1

EP 3 373 592 B1

# FIG. 2

```
                                                              40
┌─────────────────────────────────────────────────────────────┐
│              IN-VEHICLE SIDE TRANSMISSION UNIT                │
│              ─────────────────────────────────               │
│                                          44          42       │
│   30          41                          ╢├                  │
│  ┌─ ─ ┐   ┌──────────┐      ┌─────────────┬─┬───────────┐     │
│  │    │   │          │      │                            │    │
│  │    │──▶│DRIVE UNIT│──────│                      ⌇     │    │
│  │    │   │          │──────│                      ⌇─ 43 │    │
│  └─ ─ ┘   └──────────┘      │   RESONANCE UNIT           │    │
│                             └────────────────────────────┘    │
└─────────────────────────────────────────────────────────────┘
```

# FIG. 3

```
                                                         210
┌──────────────────────────────────────────────────────────┐
│                 PORTABLE SIDE RECEPTION UNIT               │       230
│   211           ─────────────────────────                 │     ┌─ ─ ─┐
│    ▽                                                       │     │     │
│    │      212              214         215                 │     │     │
│  ┌─┴──────────┐          ╱─╲      ┌──────────┐             │     │     │
│  │ RECEPTION  │          │⊗│─────▶│DEMODULATION│──────────▶│     │     │
│  │  CIRCUIT   │──────────╲─╱      │   UNIT    │            │     │     │
│  │   UNIT     │           │       └──────────┘             │     │     │
│  │ ┌──┐ ┌──┐  │           │                                │     │     │
│  │ └──┘ └──┘  │      ┌────┴─────┐                          │     │     │
│  └──┬────┬────┘      │  LOCAL   │  213                     │     │     │
│     216  217         │OSCILLATION│                         │     │     │
│            ▲         │   UNIT   │                          │     │     │
│            └─────────┴──────────┴─────────────────────────▶│     │     │
│                                                            │     └─ ─ ─┘
└──────────────────────────────────────────────────────────┘
```

FIG. 4

SIGNAL INTENSITY

LFP

TLFP

TAUD1  TAUD2  TAUD3

| TD | SYNC1 | IDk | ECC1 | ... | AUD1 | AUD2 | AUD3 |

INFORMATION FOR PORTABLE TERMINAL DEVICE

FIRST AUTHENTICATION INFORMATION

SECOND AUTHENTICATION INFORMATION

THIRD AUTHENTICATION INFORMATION

0

SIGNAL TIME

# FIG. 5

```
                    ┌─────────────┐
                    │    START    │
                    └──────┬──────┘
                           │         ╭─S100
                           ▼
        NO         ╱IS ACTIVATION╲
   ┌──────────────╱ SWITCH IN ON-STATE?╲
   │              ╲              ╱
   │               ╲            ╱
   │                    │ YES        ╭─S102
   │                    ▼
   │           ┌──────────────────┐
   │           │   SELECTION OF   │
   │           │ TRANSMISSION PATTERN │
   │           └────────┬─────────┘
   │                    │            ╭─S104
   │                    ▼
   │           ┌──────────────────┐
   │           │  TRANSMISSION OF │
   │           │  REQUEST SIGNAL  │
   │           └────────┬─────────┘
   │                    ▼◄──────────────────┐
   │                                ╭─S108  │
   │              ╱IS ANSWER ╲   NO        │
   │             ╱ SIGNAL RECEIVED?╲───────┘
   │             ╲              ╱
   │                    │ YES        ╭─S110
   │                    ▼
   │        ╱IS NUMBER OF TIMES╲  YES
   │       ╱OF DETECTION OF DIFFERENTIAL╲──────┐
   │       ╲   SIGNAL 0?     ╱               │
   │              │ NO           ╭─S112         │
   │              ▼                             │
   │        ╱ARE DETERMINATION╲  NO           │
   │       ╱ CONDITIONS SATISFIED?╲───────────┤
   │       ╲              ╱                   │
   │              │ YES      ╭─S114            │ ╭─S116
   │              ▼                      ┌─────▼─────────┐
   │    ┌──────────────────┐            │ AUTHENTICATION │
   │    │AUTHENTICATION SUCCEEDS│         │DOES NOT SUCCEED│
   │    └────────┬─────────┘            └───────┬───────┘
   │             │            ╭─S118            │
   │             ▼                              │
   │    ┌──────────────────┐                    │
   │    │ UNLOCKING PROCESSING │                │
   │    └────────┬─────────┘                    │
   │             │                              │
   └─────────────┼──────────────────────────────┘
                 ▼
          ┌─────────────┐
          │   RETURN    │
          └─────────────┘
```

FIG. 6

| No | AUD1 | AUD2 | AUD3 |
|----|------|------|------|
| 1 | 10 | 2 | 2 |
| 2 | 8 | 4 | 2 |
| 3 | 8 | 2 | 4 |
| 4 | 6 | 6 | 2 |
| 5 | 6 | 4 | 4 |
| 6 | 6 | 2 | 6 |
| 7 | 4 | 8 | 2 |
| 8 | 4 | 6 | 4 |
| 9 | 4 | 4 | 6 |
| 10 | 4 | 2 | 8 |

# FIG. 7

```
        ┌─────────────┐
        │    START    │
        └─────────────┘
               │
               ▼           S205
            ╱────────╲
          ╱  IS REQUEST  ╲      NO
         ╱ SIGNAL RECEIVED? ╲──────────┐
          ╲               ╱            │
            ╲────────╱                 │
               │ YES                   │
               ▼           S210        │
            ╱────────╲                 │
          ╱   IS LF DATA   ╲   NO       │
         ╱ PERIOD OF REQUEST SIGNAL ╲───┤
          ╲    TERMINATED?  ╱          │
            ╲────────╱                 │
               │ YES      S220         │
    ┌──────────────────────────────┐   │
    │ SIGNAL MEASUREMENT PROCESSING │   │
    └──────────────────────────────┘   │
               │          S230         │
    ┌──────────────────────────────┐   │
    │  TRANSMISSION OF ANSWER SIGNAL │  │
    └──────────────────────────────┘   │
               │◄─────────────────────┘
               ▼
        ┌─────────────┐
        │   RETURN    │
        └─────────────┘
```

29

## FIG. 8

(a) LF DATA — AUD1, AUD2, AUD3 — W1, W2, W3

(b) TH1, TH2 — W1, W2, W3 — M1, M2, M3, M4, M5, M6 — t0, t1, t2, t3, t4, t5, t6, t7 — t

# FIG. 9

START

S402 IS MEASUREMENT FIRST TIME? —NO→

↓ YES

OFFSET ADJUSTMENT — S404

↓

MEASUREMENT RANGE SETTING — S406

↓

RSSI MEASUREMENT — S408

↓

ADDITION OF NUMBER OF TIMES OF DETECTION OF TYPICAL SIGNAL — S410

RSSI MEASUREMENT — S412

↓

S414 IS INVALID SIGNAL? —NO→

↓ YES

ADDITION OF NUMBER OF TIMES OF DETECTION OF INVALID SIGNAL — S416

S418 IS DIFFERENT EQUAL TO OR GREATER THAN DIFFERENTIAL THRESHOLD VALUE PRESENT? —NO→

↓ YES

ADDITION OF NUMBER OF TIMES OF DETECTION OF DIFFERENTIAL SIGNAL — S420

ADDITION OF NUMBER OF TIMES OF DETECTION OF TYPICAL SIGNAL — S422

ADDITION OF NUMBER OF TIMES OF MEASUREMENT — S424

↓

S426 IS MEASUREMENT IN NUMBER OF TIMES OF MEASUREMENT TERMINATED? —NO→

↓ YES

TERMINATION OF MEASUREMENT — S428

CONTINUE MEASUREMENT — S430

↓

RETURN

EP 3 373 592 B1

FIG. 10

(a) ACTIVATION SWITCH

(b) CONTROL UNIT ACTIVATION

(c) TERMINATION OF CONTROL UNIT INITIALIZATION PROCESSING

(d) MAIN SWITCH

(e) MAIN SWITCH DETERMINATION VALUE

(f) LF TRANSMISSION

(g) PORTABLE DEVICE PROCESSING

(h) RF RECEPTION

(i) RF DATA DETERMINATION

(j) SOLENOID CONTROL

(k) UNLOCKING

EP 3 373 592 B1

# FIG. 11

RFA

TRFA

| TD | SYNC2 | IDENTIFICATION INFORMATION | ... | NAUD1# | NAUD2# | NAUD3# | ECC2 | ... |

SIGNAL TIME

INFORMATION FOR IN-VEHICLE DEVICE

RECEPTION TIME OF FIRST AUTHENTICATION INFORMATION

RECEPTION TIME OF SECOND AUTHENTICATION INFORMATION

RECEPTION TIME OF THIRD AUTHENTICATION INFORMATION

# FIG. 12

DUTY=0.5

BPF

1

f1    f3    f5    f7    f9    FREQUENCY

FIG. 13

FIG. 14

FIG. 15

FIG. 16

FIG. 17

**REFERENCES CITED IN THE DESCRIPTION**

**Patent documents cited in the description**

- JP 2010185186 A

- US 2002039079 A1